# FASCICULE DE BREVET EUROPEEN

(11) **EP 3 510 103 B1**
(45) Date de publication et mention de la délivrance du brevet: **16.02.2022**
(21) Numéro de dépôt: 17768844.7
(22) Date de dépôt: 05.09.2017
(51) Int. Cl.: C08L 95/00

(54) **LIANT CLAIR SOLIDE A FROID**
KLARES FESTES KALTBINDEMITTEL
CLEAR SOLID COLD BINDER

(30) Priorité: 08.09.2016 FR 1658336
(43) Date de publication de la demande: 17.07.2019
(73) Titulaire: Total Marketing Services, 92800 Puteaux (FR)
(72) Inventeur: LAPALU, Laurence, 69100 Villeurbanne (FR)
(74) Mandataire: Corizzi, Valérie
(86) Numéro de dépôt international: PCT/FR2017/052347
(87) Numéro de publication internationale: WO 2018/046838

(56) Documents cités:
- EP-A1- 0 690 102
- EP-A1- 2 072 562
- WO-A2-2009/150519
- FR-A1- 2 765 229

## Description

### DOMAINE TECHNIQUE

La présente invention a pour objet un liant clair solide à froid et sous forme divisée et ses différentes mises en forme. La présente invention concerne également son procédé de transport et/ou de stockage et/ou de manipulation ainsi que ses utilisations pour des applications routières et/ou industrielles.

### ARRIERE-PLAN TECHNOLOGIQUE

Les liants bitumineux classiques, en raison de la présence d'asphaltènes, sont de couleur noire et sont donc difficilement colorables. Les revêtements colorés sont de plus en plus utilisés car ils permettent entre autres, d'améliorer la sécurité des usagers de la route en identifiant clairement les voies spécifiques telles que les voies piétonnes, les pistes cyclables, les voies de bus. Ils permettent aussi de matérialiser certaines zones de danger comme les entrées d'agglomération ou les virages dangereux. Les revêtements colorés favorisent la visibilité en condition de faible luminosité, par exemple la nuit ou dans des sites particuliers tels que les tunnels. Enfin, ils permettent tout simplement d'améliorer l'aspect esthétique de la voirie urbaine et peuvent être utilisés pour les places publiques, les cours d'immeubles et d'écoles, les trottoirs, les rues piétonnes, les allées de jardins et de parcs, les aires de parking et de repos.

Par conséquent, pour toutes les applications précitées, on préfère utiliser des liants clairs de synthèse, ne contenant pas d'asphaltènes et pouvant être colorés.

De manière générale, le liant clair est stocké et transporté à chaud, en vrac, dans des camions-citernes ou par bateaux à des températures élevées de l'ordre de 120°C à 160°C. Or le stockage et le transport de liant clair à chaud présente certains inconvénients. D'une part, le transport de liant clair à chaud sous forme liquide est considéré comme dangereux et il est très encadré d'un point de vue réglementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, le liant clair pourra devenir visqueux durant un trajet trop long. Les distances de livraison de liant clair sont donc limitées. D'autre part, le maintien du liant clair à des températures élevées dans les cuves ou dans les camions-citernes consomme de l'énergie. En outre, le maintien en température du liant clair pendant une période donnée peut affecter les propriétés du liant clair, notamment la modification de la couleur du liant clair et les propriétés de vieillissement et ainsi changer les performances finales de l'enrobé.

Pour pallier aux problèmes de transport et de stockage du liant clair à chaud, des solutions de transport et de stockage en conditionnement à froid ont été développées. Ce mode de transport du liant clair en conditionnement à froid ne représente qu'une fraction minime des quantités transportées dans le monde, mais il correspond à des besoins bien réels pour les régions géographiques d'accès difficile et coûteux par les moyens de transport traditionnels.

A titre d'exemple on peut citer le transport du liant clair à température ambiante dans des fûts métalliques. Ce moyen est de plus en plus contestable d'un point de vue environnemental car le liant clair froid stocké dans les fûts doit être réchauffé avant son utilisation. Or cette opération est difficile à mettre en œuvre pour ce type de conditionnement et les fûts constituent un déchet après utilisation. D'autre part, le stockage du liant clair à froid dans des fûts conduit à des pertes car le liant clair est visqueux et une partie du produit reste sur les parois du fût lors du transvasement dans les cuves. Quant à la manipulation et au transport de liant clair dans ces fûts, ils peuvent s'avérer difficiles et dangereux si l'équipement spécialisé de manutention des fûts n'est pas disponible chez les transporteurs ou sur le lieu d'utilisation du liant clair.

Le document WO 2009/150519 divulgue des émulsions aqueuses de liant synthétique clair comprenant d'une part un liant synthétique clair et d'autre part d'un latex.

Le document FR 2 765 229 divulgue des liants clairs et des liants bitumineux pouvant être mis sous la forme de pastilles ou de granulés.

Le document EP 0 690 102 divulgue des liants organiques thermofusibles, notamment à base de liant clair, et comprenant en outre une cire d'hydrocarbure.

Il existe donc un besoin de trouver une solution de stockage et de transport du liant clair à froid permettant de remédier aux inconvénients cités ci-dessus.

Un objectif de l'invention est de proposer un procédé écologique et économique pour transporter et/ou stocker et/ou manipuler le liant clair à température ambiante, permettant d'éviter l'utilisation de moyens supplémentaires pour le maintien en température dudit liant clair lors du transport et/ou du stockage et/ou de la manipulation et permettant de minimiser la présence de déchets et/ou de résidus.

En particulier, le but de la présente invention est de proposer un procédé de transport et/ou de stockage du liant clair à froid amélioré.

Un autre objectif de l'invention est de proposer un procédé permettant une manipulation facile du liant clair lors des opérations de manutention.

Un autre objectif de la présente invention est de fournir un liant clair transportable et/ou stockable et/ou manipulable à température ambiante, notamment à température ambiante élevée, et dont les propriétés sont conservées au cours du temps.

En particulier, le but de la présente invention est de fournir un liant clair transportable et/ou stockable pendant une durée supérieure à 2 mois, de préférence à 3 mois, et à température ambiante élevée, notamment à une température inférieure à 100°C, de préférence de 20°C à 80°C.

Un autre objectif de l'invention est de proposer un liant clair facilement manipulable, notamment à température ambiante élevée, en particulier à une température allant jusqu'à 100°C, de préférence de 20°C à 80°C.

En particulier, le but de la présente invention est de fournir un liant clair facilement manipulable après une durée de transport et/ou de stockage prolongée à température ambiante élevée, notamment pendant une durée de transport et/ou de stockage supérieure à 2 mois, de préférence supérieure à 3 mois, et à une température allant jusqu'à 100°C, de préférence entre 20°C et 80°C.

Un autre objectif de la présente invention est de fournir un liant clair sous une forme solide à température ambiante, de façon à pouvoir le manipuler sans perte de matière. On a cherché à fournir un liant clair qui soit sous une forme permettant de le transporter, de le stocker, de le transvaser dans un équipement, même à une température ambiante élevée, sans avoir besoin de le chauffer, et sans perte de matière. Le liant clair proposé est sous forme divisée et solide à température ambiante de telle sorte qu'il permet de résoudre de façon satisfaisante les problèmes évoqués ci-dessus. En outre, un autre objectif de l'invention est la fourniture d'un liant clair sous une forme permettant de le transporter, de le stocker, de le transvaser dans un équipement, même à une température ambiante élevée, sans avoir besoin de le chauffer, et sans perte de matière, on a également cherché à fournir un liant clair directement utilisable sans autres étapes de modifications.

Un autre objectif de l'invention est de fournir un kit de liant clair stockable et/ou transportable à froid.

Un autre objectif est de proposer un procédé industriel et économique pour fabriquer du liant clair transportable et/ou stockable à température ambiante.

Un autre objectif de l'invention est de proposer un procédé industriel et économique pour fabriquer des enrobés à partir de liant clair transportable et/ou stockable à température ambiante.

### RESUME

L'invention concerne un liant clair solide à froid et sous forme divisée comprenant au moins une base de liant clair et de 0,1% à 5% en masse, par rapport à la masse totale de ladite base de liant clair, d'au moins un additif chimique choisi parmi :
- un composé de formule générale (I) :

   Arl-R-Ar2 (I),

   dans laquelle :
   - Ar1 et Ar2 représentent indépendamment l'un de l'autre un noyau benzène ou un système de noyaux aromatiques condensés de 6 à 20 atomes de carbones, substitués par au moins un groupe hydroxyle, et
   - R représente un radical divalent éventuellement substitué, dont la chaîne principale comprend de 6 à 20 atomes de carbone et au moins un groupe choisi parmi les fonctions amide, ester, hydrazide, urée, carbamate, anhydride,
- un composé de formule générale (V) :

   R"-(COOH)z (V),

   dans laquelle R" représente une chaîne linéaire ou ramifiée, saturée ou insaturée comprenant de 4 à 68 atomes de carbone,
- un acide polyphosphorique et
- leurs mélanges.

L'invention concerne encore un procédé de préparation d'un liant clair, comprenant :
- le mélange d'au moins une base de liant clair et d'au moins un additif chimique tel que défini ci-dessus, pour former un liant clair additivé,
- la mise en forme du liant clair additivé sous forme de pain ou de granules.

Selon un mode de réalisation préféré, le liant clair comprend de 0,5% à 4% en masse, plus préférentiellement de 0,5% à 2,8% en masse, et encore plus préférentiellement de 0,5% à 2,5% en masse dudit additif chimique par rapport à la masse totale de ladite base de liant clair.

Selon un mode de réalisation encore préféré, l'additif chimique est un composé organique qui présente une masse molaire en masse inférieure ou égale à 2000 gmol⁻¹, de préférence une masse molaire inférieure ou égale à 1000 gmol⁻¹.

Selon un mode de réalisation préféré, le liant clair comprend au moins :
(i) un agent plastifiant,
(ii) un agent structurant et,
(iii) un copolymère,
(iv) un additif chimique tel que défini ci-dessus.

Selon un mode de réalisation préféré, le liant clair est sous forme de pain ou de granules.

L'invention concerne également un kit comprenant au moins :
- un liant clair solide à froid et sous forme divisée tel que défini ci-dessus et de façon détaillée ci-dessous,
- une capsule comprenant un composé choisi parmi au moins un copolymère à base de motifs diène conjugué et de motifs hydrocarbure monovinyl aromatique, par exemple à base de motifs butadiène et de motifs styrène, au moins un dope d'adhésivité, au moins un agent colorant et leur mélange.

Selon un mode de réalisation préféré, le liant clair solide à froid et sous forme divisée est sous forme de pain. Selon un mode de réalisation préféré, le liant clair solide à froid et sous forme divisée comprend sur une de ses faces, une cavité permettant de loger tout ou partie de la capsule.

Selon un mode de réalisation préféré, la capsule est logée tout ou partie dans ladite cavité de manière amovible.

L'invention concerne encore un procédé de transport et/ou de stockage et/ou de manipulation de liant clair solide à froid et sous forme divisée ou d'un kit comprenant un tel liant clair, ledit liant clair étant transporté et/ou stocké et/ou manipulé sous forme de pains ou de granules de liant clair solides à température ambiante élevée.

Selon un mode de réalisation préféré, ledit liant clair ou ledit kit est transporté et/ou stocké et/ou manipulé sous forme de pains ou de granules de liant clair solides à température ambiante élevée.

L'invention concerne également l'utilisation de liant clair solide à froid et sous forme divisée ou d'un kit comprenant un tel liant clair, pour la fabrication d'enrobés ou d'asphaltes coulés.

L'invention concerne également un procédé de fabrication d'enrobés ou d'asphaltes coulés comprenant au moins un liant clair et des granulats, le liant clair étant choisi parmi les liants clairs solides à froid et sous forme divisée, ce procédé comprenant au moins les étapes de :
- chauffage des granulats à une température allant de 100°C à 180°C,
- mélange des granulats avec le liant clair dans une cuve telle qu'un malaxeur ou un tambour malaxeur,
- obtention d'enrobés ou d'asphaltes coulés.

Selon un mode de réalisation préféré, le procédé ne comporte pas d'étape de chauffage du liant clair solide à froid et sous forme divisée avant son mélange avec les granulats.

L'invention concerne également l'utilisation de liant clair solide à froid et sous forme divisée ou d'un kit comprenant un tel liant clair, pour la fabrication d'émulsions.

### DESCRIPTION DETAILLEE DE L'INVENTION

### Liant clair solide à froid et sous forme divisée

Un objet de l'invention concerne un liant clair solide à froid et sous forme divisée comprenant au moins une base de liant clair et de 0,1% à 5% en masse, par rapport à la masse totale de ladite base de liant clair, d'au moins un additif chimique choisi parmi :
- un composé de formule générale (I) :

   Arl-R-Ar2 (I),

   dans laquelle :
   - Ar1 et Ar2 représentent indépendamment l'un de l'autre un noyau benzène ou un système de noyaux aromatiques condensés de 6 à 20 atomes de carbones, substitués par au moins un groupe hydroxyle, et
   - R représente un radical divalent éventuellement substitué, dont la chaîne principale comprend de 6 à 20 atomes de carbone et au moins un groupe choisi parmi les fonctions amide, ester, hydrazide, urée, carbamate, anhydride,
- un composé de formule générale (V) :

   R"-(COOH)z (V),

   dans laquelle R" représente une chaîne linéaire ou ramifiée, saturée ou insaturée comprenant de 4 à 68 atomes de carbone,
- un acide polyphosphorique et
- leurs mélanges.

Selon un mode de réalisation de l'invention, le liant clair additivé comprend 0,5% à 4% en masse, plus préférentiellement de 0,5% à 2,8% en masse, et encore plus préférentiellement de 0,5% à 2,5% en masse dudit additif chimique par rapport à la masse totale dudit liant clair additivé.

On entend par liant clair solide à froid et sous forme divisée, un liant clair solide à température ambiante qui est conditionné sous une forme divisée, c'est-à-dire sous forme d'unités distinctes les unes des autres, que l'on nomme granules ou pains.

Le liant clair selon l'invention est désigné indifféremment dans la présente description « liant clair solide à froid et sous forme divisée » ou « liant clair additivé ».

On entend par base de liant clair, des compositions comprenant au moins un agent plastifiant, par exemple une huile d'origine pétrolière ou d'origine végétale, au moins un agent structurant, par exemple une résine hydrocarbonée d'origine pétrolière ou d'origine végétale, au moins un polymère et optionnellement au moins un dope d'adhésivité.

L'expression « compris entre X et Y », inclut les bornes. Cette expression signifie donc que l'intervalle visé comprend les valeurs X, Y et toutes les valeurs allant de X à Y.

La composition des bases de liants clairs détermine certaines propriétés essentielles de ces liants, en particulier l'indice de plasticité, la viscosité du liant, ou la couleur qui doit être la plus claire possible.

De préférence, le liant clair est une composition utilisable en substitution des liants à base de bitume pour la préparation par exemple d'enrobé bitumineux coloré. Un liant clair est exempt d'asphaltènes et peut donc garder la teinte naturelle du granulat auquel il est mélangé ou être aisément coloré à l'aide de pigments.

Selon un mode de réalisation de l'invention, le liant clair additivé est sous forme de pain ou de granules.

Un autre objet de l'invention concerne un procédé de préparation d'un liant clair selon l'invention, comprenant :
- le mélange d'au moins une base de liant clair et d'au moins un additif chimique tel que défini ci-dessus, pour donner un liant clair additivé,
- la mise en forme du liant clair additivé sous forme de pains ou de granules.

Selon un premier mode de réalisation particulier, l'étape de mélange est réalisée en mettant en contact :
- au moins une base de liant clair,
- entre 0,1% et 5% en masse, de préférence entre 0,5% et 4% en masse, plus préférentiellement entre 0,5% et 2,8% en masse, et encore plus préférentiellement entre 0,5% et 2,5% en masse du ou des additif(s) chimique(s) par rapport à la masse totale de ladite base de liant clair.

Dans la suite de la description, les pourcentages massiques sont calculés par rapport à la masse totale de la base de liant clair.

De préférence, on opère à des températures de fabrication du liant clair solide à froid et sous forme divisée comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage du liant clair avant mélange avec l'additif chimique ainsi que la température de mélange entre le liant clair et l'additif chimique. La température et la durée du chauffage varient selon la quantité de liant clair utilisée et sont définies par la norme NF EN 12594.

Selon un mode de réalisation de l'invention, la base de liant clair comprend :
i) un agent plastifiant, par exemple une huile naturelle ou synthétique, dépourvue d'asphaltènes,
ii) un agent structurant, par exemple une résine hydrocarbonée ou végétale,
iii) un copolymère,
iv) les cas échéant, des agents dopants, ou dopes, ou dopes d'adhésivité.

Des compositions de liant clair sont décrites dans les demandes de brevet suivantes et ces compositions de liant clair peuvent être mises en œuvre comme base de liant clair dans la présente invention.

On peut utiliser comme base de liant clair un liant clair comprenant des huiles blanches hydrogénées comprenant au moins 60% de carbones paraffiniques (selon la méthode ASTM D2140), et une résine hydrocarbonée, le cas échéant en mélange avec des copolymères du type éthylène-acétate de vinyle (EVA) ou polyéthylène basse densité, par exemple du type EPDM (éthylène-propylène-diène-monomère), tel que décrit dans WO 01/53409.

On peut utiliser comme base de liant clair un liant clair comprenant une huile avec une teneur en naphténiques entre 35% et 80% et une résine hydrocarbonée, comme décrit dans EP 1783174.

On peut utiliser comme base de liant clair un liant clair comprenant une huile synthétique, une résine et un polymère de type SBS ou SIS, comme décrit dans EP 1473327.

On peut utiliser comme base de liant clair, un liant clair comprenant :
- au moins une huile d'origine pétrolière, de préférence une huile aromatique comprenant des extraits aromatiques de résidus de pétrole, obtenus par extraction ou désaromatisation de résidus de distillations de coupes pétrolières, et
- au moins une résine d'origine végétale, de préférence choisie parmi les esters de colophanes, les esters du glycérol et de colophanes, les esters du pentaérythritol et de colophanes, pris seuls ou en mélange, comme décrit dans WO 2009/150519.

On peut utiliser comme base de liant clair un liant synthétique clair comprenant :
- au moins une huile d'origine végétale de préférence choisie parmi les huiles de colza, de tournesol, de soja, de lin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coco et de coprah, et leurs mélanges,
- au moins une résine d'origine pétrolière, de préférence choisie parmi les résines d'origine pétrolière hydrocarbonées issues de la copolymérisation de coupes pétrolières aromatiques, aliphatiques, cyclopentadiéniques prises seules ou en mélange et,
- au moins un polymère, de préférence choisi parmi les copolymères de styrène et de butadiène, les copolymères de styrène et d'isoprène, les terpolymères éthylène/propène/diène, les polychloroprènes, les copolymères d'éthylène et d'acétate de vinyle, les copolymères d'éthylène et d'acrylate de méthyle, les copolymères d'éthylène et d'acrylate de butyle, les terpolymères éthylène/acrylate de méthyle/méthacrylate de glycidyle, les terpolymères éthylène/acrylate de butyle/anhydride maléique, les polypropylènes atactiques, pris seuls ou en mélanges,
   la quantité d'huile d'origine végétale dans le liant étant supérieure ou égale à 10% en masse et la quantité de polymère dans le liant étant inférieure ou égale à 15% en masse, comme décrit dans WO 2010/055491.

Selon un autre mode de réalisation de l'invention, la base de liant clair comprend :
(i) un agent plastifiant constitué d'une huile contenant une teneur totale en composés paraffiniques, mesurée selon la méthode ASTM D2140, d'au moins 50%, de préférence d'au moins 60% en poids, plus préférentiellement comprise entre 50% et 90%, de préférence entre 60% et 80%, et
(ii) un copolymère à base de motifs diène conjugué et de motifs hydrocarbure monovinyl aromatique, par exemple à base de motif butadiène et de motifs styrène.

De préférence, l'huile est une huile synthétique issue des coupes d'unité de désasphaltage (ou « huile DAO »).

De préférence, l'huile contient une teneur totale en composés paraffiniques supérieure ou égale à 50%, de préférence supérieure ou égale à 60% en poids, et une teneur totale en composés naphténiques inférieure ou égale à 25% en poids, mesurée selon la méthode ASTM D2140.

De préférence, l'huile contient une teneur totale en composés paraffiniques supérieure ou égale à 50%, de préférence supérieure ou égale à 60% en poids, une teneur totale en composés naphténiques inférieure ou égale à 25% en poids, et une teneur totale en composés aromatiques inférieure ou égale à 25% en poids, mesurée selon la méthode ASTM D2140.

Par exemple, l'huile contient une teneur totale en composés paraffiniques, mesurée selon la méthode ASTM D2140, comprise entre 50% et 90%, de préférence entre 60% et 80% en poids, et une teneur totale en composés naphténiques comprise entre 5% et 25% en poids, et une teneur totale en composés aromatiques comprise entre 5% et 25% en poids.

De préférence, l'huile a un point d'aniline, mesuré selon la norme IS02977 : 1997, supérieur ou égal à 80°C, de préférence supérieur ou égal à 90 °C, par exemple supérieur à 100°C.

De préférence, la base de liant clair comprend (i) de 40 à 80% en poids d'agent plastifiant, (ii) de 20 à 50% en poids de résine, (iii) de 1 à 7% en poids de copolymère ; et, (iv) éventuellement de 0,05% à 0,5% en poids de dope d'adhésivité, par exemple d'aminé, par rapport au poids de base de liant clair.

Avantageusement, la base de liant clair comprend (i) de 40 à 80% en poids d'agent plastifiant, (ii) de 20 à 50% en poids de résine, (iii) de 1 à 7% en poids de copolymère ; et, (iv) de 0,05% à 0,5% en poids de dope d'adhésivité, par exemple d'amine, par rapport au poids de base de liant clair.

Avantageusement, la base de liant clair comprend également (i) de 45% à 70% en poids d'agent plastifiant, (ii) de 25 à 50% en poids de résine, (iii) de 1% à 7% en poids de copolymère ; et, (iv) éventuellement de 0,1% et 0,3% en poids de dope d'adhésivité, par rapport au poids total de base de liant clair.

De préférence, la base de liant clair consiste essentiellement en (i) de 40 à 80% en poids d'agent plastifiant, (ii) de 20 à 50% en poids de résine, (iii) de 1 à 7% en poids de copolymère, par rapport au poids total de base de liant clair.

Avantageusement, la base de liant clair consiste essentiellement en (i) de 40 à 80% en poids d'agent plastifiant, (ii) de 20 à 50% en poids de résine, (iii) de 1 à 7% en poids de copolymère et (iv) de 0,05% à 0,5% en poids de dope d'adhésivité, par rapport au poids total de base de liant clair.

Avantageusement, la base de liant clair consiste essentiellement également en (i) de 45% à 70% en poids d'agent plastifiant, (ii) de 25 à 50% en poids de résine (iii) de 1% à 7% en poids de copolymère ; et, (iv) de 0,1% et 0,3% en poids de dope d'adhésivité, par rapport au poids total de base de liant clair.

De préférence, le copolymère est un copolymère à base de motifs de styrène et de butadiène qui comprend une teneur pondérale en butadiène 1-2 allant de 5 à 70%.

De préférence, le copolymère est avantageusement un copolymère à base de motifs de styrène et de butadiène qui comprend une teneur pondérale en butadiène 1-2 allant de 5 à 70% et une teneur pondérale en groupement 1,2-vinyle comprise entre 10 et 40%.

Par exemple, ledit copolymère à base de motifs de styrène et de butadiène a une masse moléculaire moyenne en masse comprise entre 10 000 et 500 000, de préférence entre 50 000 et 200 000, et plus préférentiellement entre 50 000 et 150 000 daltons. De préférence, on utilisera un copolymère bloc styrène/butadiène ou bloc styrène/butadiène/styrène.

Les liants clairs selon l'invention sont avantageusement caractérisés en ce qu'ils présentent un indice de couleur inférieur ou égal à 4, de préférence inférieur ou égal à 3, tel que déterminé selon l'échelle ASTM DH4.

En outre, ils peuvent avantageusement présenter une température de ramollissement Température Bille-Anneau déterminée selon la norme NF EN1427 comprise entre 55°C et 90°C.

De préférence, le liant clair selon l'invention a une pénétrabilité à 25°C, mesurée selon la norme NF EN 1426, comprise entre 10 et 220 1/10 mm, de préférence entre 30 et 100 1/10 mm, plus préférentiellement entre 40 et 80 1/10 mm. L'homme du métier peut moduler la pénétrabilité du liant clair de l'invention notamment en choisissant judicieusement le rapport en poids [agent structurant/agent plastifiant] dans la composition de la base de liant clair. En effet, il est connu qu'une augmentation de ce rapport permet de diminuer la pénétrabilité à 25°C.

Les bases de liants clairs mises en œuvre dans l'invention peuvent être préparées par exemple selon le procédé suivant comprenant les étapes de :
(i) mélange de l'agent plastifiant, par exemple l'huile DAO, et chauffage à une température comprise entre 140-200°C, par exemple de 10 minutes à 30 minutes,
(ii) ajout de l'agent structurant, par exemple la résine hydrocarbonée, mélange et chauffage à une température comprise entre 140-200°C, par exemple de 30 minutes à 2 heures,
(iii) ajout du ou des polymères, par exemple le SBS, mélange et chauffage à une température comprise entre 140-200°C, par exemple, de 90 minutes à 3 heures, de préférence de 90 minutes à 2 heures 30,
(iv) ajout éventuel d'un dope d'adhésivité, mélange et chauffage à une température comprise entre 140-200°C, par exemple, de 5 minutes à 20 minutes.

L'ordre des étapes (i) à (iv) peut être modifié.

### L'agent plastifiant

Par «agent plastifiant », on entend au sens de l'invention, un constituant chimique permettant de fluidifier et de réduire la viscosité et le module du liant obtenu.

Dans un mode de réalisation de l'invention, l'agent plastifiant est choisi parmi les huiles d'origine pétrolière, les huiles d'origine végétale et leurs mélanges.

Dans un mode de réalisation préféré de l'invention, les huiles d'origine végétale sont choisies parmi les huiles de colza, de tournesol, de soja, de lin, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coco et de coprah, et leurs mélanges.

De préférence, les huiles d'origine végétale sont choisies parmi les huiles de colza, de tournesol, de lin, de coco, de soja, et leurs mélanges.

Dans un mode de réalisation préféré de l'invention, les huiles d'origine pétrolière sont choisies parmi les huiles aromatiques ou les huiles d'origine synthétique.

De préférence, les huiles aromatiques comprennent des extraits aromatiques de résidus de pétrole, obtenus par extraction ou désaromatisation de résidus de distillations de coupes pétrolières.

Plus préférentiellement, les huiles aromatiques ont une teneur en composés aromatiques comprise entre 30 et 95% en poids, avantageusement comprise entre 50 et 90% en poids, plus avantageusement comprise entre 60 et 85% en poids (méthode SARA Saturés/Aromatiques/Résines/Asphaltènes).

Plus préférentiellement, les huiles aromatiques ont une teneur en composés saturés comprise entre 1 et 20% en poids, avantageusement comprise entre 3 et 15% en poids, plus avantageusement comprise entre 5 et 10% en poids (méthode SARA : Saturés/Aromatiques/Résines/Asphaltènes).

Plus préférentiellement, les huiles aromatiques ont une teneur en composés résiniques comprise entre 1 et 10% en poids, avantageusement comprise entre 3 et 5% en poids, (méthode SARA : Saturés/Aromatiques/Résines/Asphaltènes).

Dans un mode préféré de réalisation de l'invention, les huiles d'origine synthétique sont issues des coupes de désasphaltage de distillation sous pression réduite (résidu sous vide, RSV) de pétrole brut (ci-après dénommée « huile DAO »).

En particulier, dans un mode de réalisation préféré, l'agent plastifiant est constitué uniquement d'une huile DAO.

Les teneurs en composés paraffiniques, naphténiques et aromatiques mentionnées dans la présente demande sont déterminées selon la norme ASTM D2140, en % en poids par rapport au poids de l'huile.

Dans un mode de réalisation spécifique, l'agent plastifiant est une huile, par exemple une huile DAO, contenant une teneur totale en composés paraffiniques d'au moins 50% en poids, de préférence d'au moins 60% en poids, par exemple comprise entre 50% et 90%, de préférence entre 60% et 90%, plus préférentiellement entre 50% et 80% et en particulier comprise entre 55% et 70% ou en particulier comprise entre 60% et 75%.

Dans un mode de réalisation plus spécifique, l'agent plastifiant est une huile, par exemple une huile DAO, contenant en outre une teneur totale en composés naphténiques qui n'excède pas 25%, par exemple comprise entre 5% et 25%, et en particulier comprise entre 10% et 25%.

Dans un mode de réalisation plus spécifique, l'agent plastifiant est une huile, par exemple une huile DAO, contenant en outre une teneur totale en aromatiques qui n'excède pas 25%, par exemple comprise entre 5% et 25%, et en particulier comprise entre 8% et 18%.

Dans un mode particulièrement préféré, l'agent plastifiant est une huile, par exemple une huile DAO, comprenant les teneurs respectives :
(i) une teneur totale en composés paraffiniques comprise entre 50% et 90% ;
(ii) une teneur totale en composés naphténiques comprise entre 5% et 25%, par exemple entre 15% et 25% ; et
(iii) une teneur totale en composés aromatiques comprise entre 5% et 25%, par exemple entre 10% et 15%.

Dans un mode plus particulièrement préféré, l'agent plastifiant est une huile, par exemple une huile DAO, comprenant les teneurs respectives :
(i) une teneur totale en composés paraffiniques comprise entre 60% et 75% ;
(ii) une teneur totale en composés naphténiques comprise entre 5% et 25%, par exemple entre 15% et 25% ; et
(iii) une teneur totale en composés aromatiques comprise entre 5% et 25%, par exemple entre 10% et 15%.

Des huiles répondant aux caractéristiques ci-dessus et utilisables pour la préparation du liant clair selon l'invention sont obtenues par les procédés de désasphaltage des résidus sous vide (RSV) issus du raffinage du pétrole, par exemple par un désasphaltage à l'aide d'un solvant en C₃ à C₆, de préférence au propane. Ces procédés de désasphaltages sont bien connus de l'homme du métier et sont décrits par exemple dans Lee et al 2014, Fuel Processing Technology 119 : 204-210 : Les résidus issus de la distillation sous vide (RSV) sont séparés selon leur poids moléculaire en présence de solvant C₃ à C₆ (par exemple le propane). L'huile dite DAO (« deasphalted oil ») ainsi obtenue est riche en paraffine, présente une très faible teneur en asphaltènes, a une température d'évaporation comprise entre 440°C et 750°C, et une gravité API bien supérieure à celle des résidus sous vide.

Les teneurs respectives en composés paraffiniques, naphténiques et aromatiques dépendent dans une certaine mesure de la nature du pétrole brut à l'origine de l'huile DAO et du processus de raffinage utilisé. L'homme du métier sait déterminer les teneurs respectives en composés paraffiniques, naphténiques et aromatiques d'une huile DAO par exemple à l'aide de la méthode de fractionnement SARA également décrite dans Lee et al 2014, Fuel Processing Technology 119 : 204-210 et ainsi sélectionner l'huile DAO appropriée pour la préparation du liant clair selon l'invention.

Dans un mode de réalisation, la quantité d'agent plastifiant mise en œuvre dans le procédé de préparation de la base de liant clair est de 40% à 80%, de préférence de 45% à 70% en poids par rapport au poids total de base de liant clair.

### L'agent structurant

Par « agent structurant », on entend tout constituant chimique conférant des propriétés mécaniques et une cohésivité satisfaisante audit liant.

L'agent structurant utilisé dans le cadre de l'invention, est une résine, de préférence choisie parmi les résines d'origine pétrolière hydrocarbonée ou d'origine végétale.

Selon un mode de réalisation, les résines d'origine végétale sont choisies parmi les esters de colophanes tels que les esters méthyliques de colophanes, les esters du glycérol et de colophanes, les esters du pentaérythritol et de colophanes, et leurs mélanges.

Selon un mode de réalisation, les résines d'origine végétale sont obtenues à partir de végétaux et/ou de plantes. Elles peuvent être de récolte, c'est-à-dire récoltées à partir du végétal vivant. Elles peuvent être utilisées telles quelles, on parle alors de résines naturelles ou être transformées chimiquement, on parle alors de résines naturelles modifiées.

Parmi les résines de récolte, on trouve les résines accroïdes, le dammar, les colophanes naturelles, les colophanes modifiées, les esters de colophane et les résinates métalliques. Celles-ci peuvent être prises seules ou en mélange.

Parmi les colophanes naturelles, on peut citer les colophanes de gemme et de bois, en particulier de pin, et/ou de tall oil. Ces colophanes naturelles peuvent être prises seules ou en mélange.

Parmi les colophanes modifiées, on peut citer les colophanes hydrogénées, les colophanes dismutées, les colophanes polymérisées et/ou les colophanes maléisées. Ces colophanes naturelles modifiées peuvent être prises seules ou en mélange, et subir un ou plusieurs traitements de dismutation, polymérisation et/ou maléisation.

Parmi les esters de colophanes, on peut citer les esters méthyliques de colophanes naturelles, les esters méthyliques de colophanes hydrogénées, les esters du glycérol et de colophanes naturelles, les esters du glycérol et de colophanes hydrogénées, les esters du glycérol et de colophanes dismutées, les esters du glycérol et de colophanes polymérisées, les esters du glycérol et de colophanes maléisées, les esters du pentaérythritol et de colophanes naturelles et les esters du pentaérythritol et de colophanes hydrogénées. Ces esters de colophanes peuvent être pris seuls ou en mélange et provenir de colophanes ayant subi un ou plusieurs traitements de dismutation, polymérisation et/ou maléisation.

Les esters du pentaérythritol et de colophanes naturelles et les esters du pentaérythritol et de colophanes hydrogénées sont les esters de colophanes préférés.

Parmi les résinates métalliques, on peut citer les carboxylates métalliques, par exemple de Ca, Zn, Mg, Ba, Pb, Co, obtenus à partir de colophanes naturelles ou de colophanes modifiées. On préfère les résinates de calcium, les résinates de zinc, les résinates mixtes calcium/zinc, pris seuls ou en mélange.

Pour plus d'informations sur les résines d'origine végétale utilisables selon l'invention, se référer à l'article K340 de Bernard Delmond publié dans les « Techniques de l'ingénieur ».

De préférence, les résines d'origine végétale ont une température de ramollissement comprise entre 60°C et 200°C, de préférence entre 80°C et 150°C, plus préférentiellement entre 90°C et 110°C.

De préférence, les résines d'origine végétale ont un indice d'acidité compris entre 2 mg et 25 mg, de préférence entre 5 mg et 20 mg, plus préférentiellement entre 6 mg et 16 mg.

Les résines d'origine pétrolière hydrocarbonée sont issues de la copolymérisation de coupes pétrolières aromatiques, aliphatiques, cyclopentadiéniques, prises seules ou en mélange, de préférence issues de coupes pétrolières aromatiques. Par exemple, il peut s'agir d'une résine thermoplastique polycycloaliphatique, par exemple du type homopolymères de cyclopentadiène hydrogénés, à faible masse moléculaire.

Plus particulièrement, la résine hydrocarbonée du type des cyclopentanes a un point de ramollissement (ou température Bille-Anneau, TBA, selon la norme NF T 66-008) supérieur à 125°C, et un indice de couleur Gardner (selon la norme NF T 20-030) égal au maximum à 1.

Le rapport en poids entre l'agent structurant et l'agent plastifiant mis en œuvre pour la préparation du liant clair selon l'invention, est compris en général, de 0,3 à 1,5, par exemple de 0, 5 à 1.

Dans un mode de réalisation spécifique, la quantité d'agent structurant mise en œuvre dans le procédé de préparation de la base de liant clair est de 25 à 50% en poids par rapport au poids total de base de liant clair.

### Le polymère

Le polymère mis en œuvre dans le procédé de préparation du liant clair selon l'invention est un copolymère à base de motifs diène conjugué et de motifs hydrocarbure monovinyl aromatique. Le diène conjugué est choisi de préférence parmi ceux comportant de 4 à 8 atomes de carbone par monomère, par exemple le butadiène, le 2-méthyl-1,3-butadiène (isoprène), le 2,3-diméthyl-1,3-butadiène, le 1,3-pentadiène et le 1,2-hexadiène, chloroprène, butadiène carboxylé, isoprène carboxylé, en particulier le butadiène et l'isoprène, et leurs mélanges.

L'hydrocarbure monovinyl aromatique est choisi de préférence parmi le styrène, l'o-méthyl styrène, le p-méthyl styrène, le p-tert-butylstyrène, le 2,3 diméthyl- styrène, Pa- méthyl styrène, le vinyl naphtalène, le vinyl toluène, le vinyl xylène, et analogues ou leurs mélanges, en particulier le styrène.

Plus particulièrement, le polymère consiste en un ou plusieurs copolymères choisis parmi les copolymères séquencés, de styrène et de butadiène, de styrène et d'isoprène, de styrène et de chloroprène, de styrène et de butadiène carboxylé ou encore de styrène et d'isoprène carboxylé. Un copolymère préféré est un copolymère à base de motifs butadiène et de motifs styrène tel que le copolymère bloc styrène/butadiène SB ou le copolymère bloc styrène/butadiène/styrène SBS.

Le copolymère de styrène et de diène conjugué, en particulier le copolymère de styrène et de butadiène, possède avantageusement une teneur pondérale en styrène allant de 5 à 50%, de préférence de 20 à 50%.

Le copolymère de styrène et de diène conjugué, en particulier le copolymère de styrène et de butadiène, possède avantageusement une teneur pondérale en butadiène (1-2 et 1-4) allant de 50 à 95%. Le copolymère de styrène et de diène conjugué, en particulier le copolymère de styrène et de butadiène, possède avantageusement une teneur pondérale en butadiène 1-2 allant de 5 à 70%, de préférence de 5 à 50%. Les motifs butadiène 1-2 sont les motifs qui résultent de la polymérisation via l'addition 1-2 des motifs butadiène.

La masse moléculaire moyenne en masse du copolymère de styrène et de diène conjugué, et notamment celle du copolymère de styrène et de butadiène, peut être comprise, par exemple, entre 10 000 et 500 000, de préférence entre 50 000 et 200 000 et plus préférentiellement de 50 000 à 150 000 daltons.

Dans un mode de réalisation spécifique, le liant clair ne comprend pas de polymère du type éthylène-acétate de vinyle (EVA) ou du type polyéthylène à basse densité, tel que l'EPDM (éthylène-propylène-diène-monomère) ou EPM (éthylène-propylène monomère).

Dans un mode de réalisation spécifique, la quantité totale de polymère mis en œuvre dans le procédé de l'invention est de 0,5 à 20% en masse, de préférence de 1 à 10%, de préférence de 1 à 7%, par exemple de 2% à 5% par rapport à la masse totale de base de liant clair.

### Les dopes d'adhésivité

Pour améliorer l'affinité réciproque entre le liant et les granulats et en assurer la pérennité, des dopes d'adhésivité peuvent également être utilisés. II s'agit par exemple de composés tensioactifs azotés dérivés des acides gras (aminés, polyamines, alkyl-polyamines, etc...).

Lorsqu'ils sont ajoutés au liant clair, les dopes d'adhésivité représentent en général entre 0,05% et 0,5% en poids par rapport au poids de liant clair. Par exemple, dans un mode de réalisation spécifique, on ajoutera de 0,05% à 0,5% d'amine, de préférence de 0,1% à 0,3% d'aminé par rapport à la masse totale de base de liant clair.

### Les agents colorants

Le liant synthétique clair peut également comprendre un ou plusieurs agents colorants, tels que des pigments minéraux ou des colorants organiques. Les pigments sont sélectionnés suivant la teinte, la couleur souhaitée pour le revêtement. On utilisera par exemple des oxydes métalliques tels que des oxydes de fer, des oxydes de chrome, des

oxydes de cobalt, des oxydes de titane pour obtenir les couleurs rouge, jaune, gris, vert bleu ou blanc. Les pigments peuvent être ajoutés, indifféremment dans le liant clair ou dans l'enrobé (en mélange avec les granulats par exemple) ou dans une émulsion du liant clair.

### L'additif chimique

Le liant clair selon l'invention comprend de 0,1% à 5% en masse, par rapport à la masse totale de ladite base de liant clair, d'au moins un additif chimique choisi parmi :
- un composé de formule générale (I) :

   Arl-R-Ar2 (I),

   dans laquelle :
   - Ar1 et Ar2 représentent indépendamment l'un de l'autre un noyau benzène ou un système de noyaux aromatiques condensés de 6 à 20 atomes de carbones, substitués par au moins un groupe hydroxyle, et
   - R représente un radical divalent éventuellement substitué, dont la chaîne principale comprend de 6 à 20 atomes de carbone et au moins un groupe choisi parmi les fonctions amide, ester, hydrazide, urée, carbamate, anhydride,
- un composé de formule générale (V) :

   R"-(COOH)z (V),

   dans laquelle R" représente une chaîne linéaire ou ramifiée, saturée ou insaturée comprenant de 4 à 68 atomes de carbone,
- un acide polyphosphorique et
- leurs mélanges.

En particulier, le liant clair solide et sous forme divisée comprend au moins un additif chimique en une quantité adaptée pour que sa pénétrabilité soit de préférence de 5 à 50 1/10mm, et/ou que la température de ramollissement bille et anneau (TBA) soit, de préférence, supérieure ou égale à 60°C, étant entendu que la pénétrabilité est mesurée à 25°C selon la norme EN 1426 et la TBA selon la norme EN 1427.

Dans un mode de réalisation de l'invention, l'additif chimique est un composé organique qui présente une masse molaire inférieure ou égale à 2000 gmol⁻¹, de préférence une masse molaire inférieure ou égale à 1000 gmol⁻¹.

Dans ce premier mode de réalisation de l'invention, selon une première variante, le composé organique est un composé de formule générale (I) :

Arl-R-Ar2 (I),

dans laquelle :
- Ar1 et Ar2 représentent indépendamment l'un de l'autre un noyau benzène ou un système de noyaux aromatiques condensés de 6 à 20 atomes de carbones, substitués par au moins un groupe hydroxyle, et
- R représente un radical divalent éventuellement substitué, dont la chaîne principale comprend de 6 à 20 atomes de carbone et au moins un groupe choisi parmi les fonctions amide, ester, hydrazide, urée, carbamate, anhydride.

De préférence, Ar1 et/ou Ar2 sont substitués par au moins un groupe alkyle de 1 à 10 atomes de carbone, avantageusement en une ou des positions *ortho* par rapport au(x) groupe(s) hydroxyle(s), plus préférentiellement Ar1 et Ar2 sont des groupes 3,5-dialkyl-4-hydroxyphényle, avantageusement des groupes 3,5-di-*tert*-butyl-4-hydroxyphényle. De préférence, R est en position *para* par rapport à un groupe hydroxyle de Ar1 et/ou Ar2.

Avantageusement, le composé de formule (I) est le 2',3-bis[(3-[3, 5-di-*tert*-butyl-4-hydroxyphenyl]propionyl)]propionohydrazide.

Il est décrit une seconde variante de ce premier mode de réalisation, ne faisant pas partie de la présente invention, dans laquelle le composé organique est un composé de formule générale (II) :

R-(NH)ₙCONH-(X)ₘ-NHCO(NH)ₙ-R' (II),

dans laquelle,
- les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ;
- le groupement X contient une chaîne hydrocarbonée, saturée ou insaturée, linéaire, cyclique ou ramifiée, comprenant de 1 à 22 atomes de carbone, éventuellement substituée, et comprenant éventuellement des hétéroatomes, des cycles et/ou des hétérocycles ;
- n et m sont des entiers ayant une valeur de 0 ou 1 indépendamment l'un de l'autre.

Selon cette variante, lorsque l'entier m a une valeur de 0, alors les groupements R-(NH)ₙCONH et NHCO(NH)ₙ-R' sont liés de façon covalente par une liaison hydrazide CONH-NHCO. Le groupement R, ou le groupement R', comprend alors au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

Toujours selon cette variante, lorsque l'entier m a une valeur de 1, alors le groupement R, le groupement R' et/ou le groupement X, comprend au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

De préférence, le groupement R et/ou R' comprend une chaîne hydrocarbonée aliphatique de 4 à 22 atomes de carbone, notamment, choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

De préférence, le groupement X représente une chaîne hydrocarbonée linéaire, saturée comprenant de 1 à 22 atomes de carbone. De préférence, le groupement X est choisi parmi les groupements C₂H₄, C₃H₆.

De préférence, le groupement X peut aussi être un groupement cyclohexyl ou un groupement phényl, les radicaux R-(NH)ₙCONH- et NHCO(NH)ₙ-R'- peuvent alors être en position ortho, méta ou para. Par ailleurs, les radicaux R-(NH)ₙCONH- et NHCO(NH)ₙ-R'- peuvent être en position cis ou trans l'un par rapport à l'autre. De plus, lorsque le radical X est cyclique, ce cycle peut être substitué par d'autres groupements que les deux groupements principaux R-(NH)ₙCONH- et -NHCO(NH)ₙ-R'.

De préférence, le groupement X comprend deux cycles de 6 carbones reliés par un groupement CH₂, ces cycles étant aliphatiques ou aromatiques. Dans ce cas, le groupement X est un groupement comportant deux cycles aliphatiques reliés par un groupement CH₂ éventuellement substitué comme par exemple :

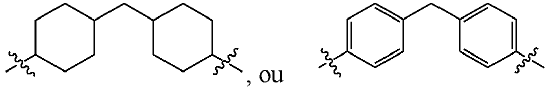

Avantageusement, selon cette variante, le composé organique est un composé de formule générale (II) choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que la N,N'-éthylènedi(stéaramide) de formule C₁₇H₃₅-CONH-CH₂-CH₂-NHCO-C₁₇H₃₅ ; et les dérivés uréides tels que la 4,4'-bis(dodécylaminocarbonylamino)diphénylmethane de formule C₁₂H₂₅-NHCONH-C₆H₄-CH₂-C₆H₄-NHCONH-C₁₂H₂₅.

De préférence, le composé de formule générale (II) est choisi parmi ceux qui satisfont à la condition n = 0.

De préférence, le composé de formule générale (II) est choisi parmi ceux qui satisfont à la condition : la somme des nombres des atomes de carbone de R, X et R' est supérieur ou égal à 10, avantageusement supérieur ou égal à 14, de préférence supérieur ou égal à 18. De préférence, le composé de formule générale (II) est choisi parmi ceux qui satisfont à la condition : le nombre des atomes de carbone de l'un au moins de R et R' est supérieur ou égal à 10, avantageusement supérieur ou égal à 12, de préférence supérieur ou égal à 14.

Il est également décrit une première variante, ne faisant pas partie de la présente invention, dans laquelle le composé de formule générale (II) est choisi parmi ceux de formule (IIA) :

R-CONH-(X)ₘ-NHCO-R' (IIA)

dans laquelle R, R', m et X ont la même définition que ci-dessus.

De préférence, dans la formule (IIA) lorsque m= 1, le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements C₂H₄, C₃H₆.

De préférence, le composé de formule générale (IIA) est choisi parmi ceux qui satisfont à la condition : la somme des nombres des atomes de carbone de R, X et R' est supérieur ou égal à 10, avantageusement supérieur ou égal à 14, de préférence supérieur ou égal à 18. De préférence, le composé de formule générale (IIA) est choisi parmi ceux qui satisfont à la condition : le nombre des atomes de carbone de l'un au moins de R et R' est supérieur ou égal à 10, avantageusement supérieur ou égal à 12, de préférence supérieur ou égal à 14.

Plus préférentiellement, selon cette variante, le composé de formule générale (IIA) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂H₄₃-CONH-NHCO-C₂H₄₃; les diamides telles que le N,N'-éthylènedi(laurylamide) de formule C₁₁H₂₃-CONH-CH₂-CH₂-NHCO-C₁₁H₂₃, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂.

De façon encore plus avantageuse, le composé de formule générale (IIA) est le N,N'-éthylènedi(stéaramide) de formule C₁₇H₃₅-CONH-CH₂-CH₂-NHCO-C₁₇H₃₅.

Il est également décrit une seconde variante, ne faisant pas partie de la présente invention, dans laquelle le composé de formule générale (II) est choisi parmi ceux de formule (IIB) :

R-CONH-R' (IIB)

dans laquelle R et R' ont la même définition que ci-dessus.

Avantageusement, selon cette variante, la somme des nombres des atomes de carbone de R et R' est supérieur ou égal à 10, avantageusement supérieur ou égal à 14, de préférence supérieur ou égal à 18.

Encore plus avantageusement, selon cette variante, le nombre des atomes de carbone de R est supérieur ou égal à 10, avantageusement supérieur ou égal à 12, de préférence supérieur ou égal à 14, et R' = H.

Avantageusement, le composé de formule générale (II) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que le N,N'-éthylènedi(laurylamide) de formule C₁₁H₂₃-CONH-CH₂-CH₂-NHCO-C₁₁H₂₃, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂.

De façon encore plus avantageuse, le composé de formule générale (II) est le N,N'-éthylènedi(stéaramide) de formule C₁₇H₃₅-CONH-CH₂-CH₂-NHCO-C₁₇H₃₅.

Il est également décrit une troisième variante de ce mode de réalisation, ne faisant pas partie de la présente invention, dans laquelle le composé organique est un composé de formule (III) :

(R-NHCO)ₓ-Z-(NHCO-R')_{y} (III),

dans laquelle,
- R et R', identiques ou différents, contiennent une chaîne hydrocarbonée saturée ou insaturée, linéaire, ramifiée ou cyclique comprenant de 1 à 22 atomes de carbone, éventuellement substituée, et éventuellement comprenant des hétéroatomes, des cycles et/ou des hétérocycles,
- Z représente un groupement tri-fonctionnalisé choisi parmi les groupements suivants : 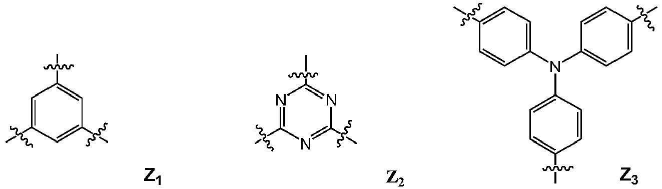
- x et y sont des entiers différents de valeur variant de 0 à 3 et tels que x+y=3.

De préférence, lorsque x est égal à 0 et Z représente Z₂, le composé de formule (III) est la N2, N4, N6-tridécylmélamine ayant la formule suivante avec R' représentant le groupe C₉H₁₉:

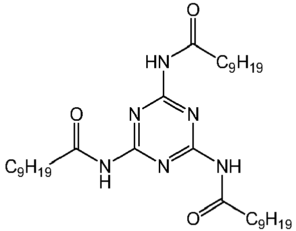

D'autres composés préférés répondant à la formule (III), sont tels que x est égal à 0, Z représente Z₂ et R' représente une chaîne hydrocarbonée saturée, linéaire, de 1 à 22 atomes de carbone, de préférence de 2 à 18 atomes de carbone, de préférence de 5 à 12 atomes de carbone.

D'autres composés préférés répondant à la formule (III) sont tels que : y est égal à 0 et Z représente Z₁, les composés ont alors pour formule : 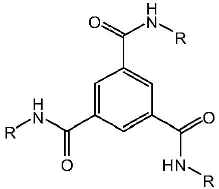 avec R choisi parmi les groupes suivants, pris seuls ou en mélanges :

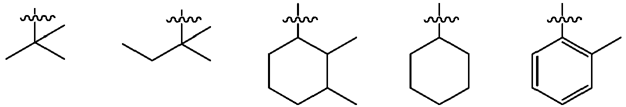

D'autres composés préférés répondant à la formule (III) sont tels que : y est égal à 0, Z représente Z₁ et R représente une chaîne hydrocarbonée saturée, linéaire, de 1 à 22 atomes de carbone, de préférence de 8 à 12 atomes de carbone.

Il est également décrit une quatrième variante de ce mode de réalisation, ne faisant pas partie de la présente invention, dans laquelle le composé organique est un produit de réaction d'au moins un polyol en C3-C12 et d'au moins un aldéhyde en C2-C12. Parmi les polyols utilisables, on peut citer le sorbitol, le xylitol, le mannitol et/ou le ribitol. De préférence, le polyol est le sorbitol.

Avantageusement, selon cette variante, le composé organique est un composé qui comprend au moins une fonction de formule générale (IV) : 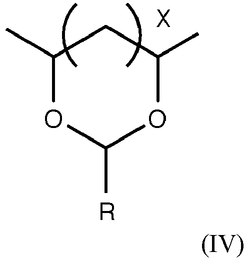 avec :
- x est un entier,
- R est choisi parmi un radical alkyle, alcényle, aryle, ou aralkyle en C1-C11, éventuellement substitué par un ou plusieurs atomes d'halogène, un ou plusieurs groupements alcoxy en C1-C6

Le composé organique est avantageusement un dérivé du sorbitol. Par « dérivé du sorbitol », on entend tout produit de réaction, obtenu à partir du sorbitol. En particulier, tout produit de réaction obtenu en faisant réagir un aldéhyde avec du D-sorbitol. On obtient par cette réaction de condensation, des acétals de sorbitol, qui sont des dérivés du sorbitol. Le 1,3:2,4-Di-O-benzylidène-D-sorbitol est obtenu en faisant réagir 1 mole de D-sorbitol et 2 moles de benzaldéhyde et a pour formule :

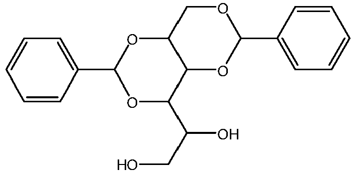

Les dérivés du sorbitol pourront ainsi être tous les produits de condensation d'aldéhydes, notamment d'aldéhydes aromatiques avec le sorbitol. On obtiendra alors des dérivés du sorbitol de formule générale : 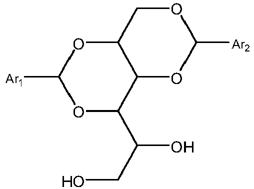 où Ar₁ et Ar₂ sont des noyaux aromatiques éventuellement substitués.

Parmi les dérivés du sorbitol, autre que le 1,3:2,4-Di-O-benzylidene-D-sorbitol on peut trouver par exemple le 1,3:2,4:5,6-tri-O-benzylidene-D-sorbitol, le 2,4-mono-O-benzylidene-D-sorbitol, le 1,3:2,4-bis(p-methylbenzylidene) sorbitol, 1,3:2,4-bis(3,4-dimethylbenzylidene) sorbitol, 1,3:2,4-bis(p-ethylbenzylidene) sorbitol, 1,3:2,4-bis(p-propylbenzylidene) sorbitol, 1,3:2,4-bis(p-butylbenzylidene) sorbitol, 1,3:2,4-bis(p-ethoxylbenzylidene) sorbitol, 1,3:2,4-bis(p-chlorobenzylidene) sorbitol, 1,3:2,4-bis(p-bromobenzylidene) sorbitol, 1,3:2,4-Di-O-methylbenzylidene-D-sorbitol, 1,3:2,4-Di-O-dimethylbenzylidene-D-sorbitol, 1,3:2,4-Di-O-(4-methylbenzylidene)-D-sorbitol, 1,3:2,4-Di-O-(4,3-dimethylbenzylidene)-D-sorbitol. De préférence, selon cette variante, le composé organique est le 1,3:2,4-Di-O-benzylidene-D-sorbitol.

Selon une cinquième variante de ce mode de réalisation de l'invention, le composé organique est un composé de formule générale (V) :

R"-(COOH)z (V),

dans laquelle R" représente une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R" est de préférence, une chaîne linéaire saturée de formule C_{w}H_{2w} avec w un entier variant de 4 à 22, de préférence de 4 à 12.

Selon cette variante de l'invention, les composés organiques répondant à la formule (V) peuvent être des diacides (z = 2), des triacides (z = 3) ou des tétracides (z = 4). Les composés organiques préférés selon cette variante, sont des diacides avec z = 2.

De préférence, selon cette variante, les diacides ont pour formule générale HOOC-C_{w}H_{2w}-COOH avec w un entier variant de 4 à 22, de préférence de 4 à 12 et où z = 2 et R" = C_{w}H_{2w}.

Avantageusement, selon cette variante, le composé organique est un diacide choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Plus avantageusement, le composé organique est l'acide sébacique ou acide 1,10-décanedioïque avec w = 8.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple).

De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné.

Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

Il est également décrit une sixième variante de ce mode de réalisation, ne faisant pas partie de la présente invention, dans laquelle le composé organique est un composé de formule générale (VI) : 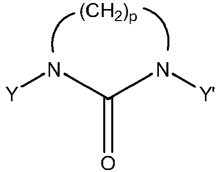 dans laquelle,
- les groupements Y et Y' représentent indépendamment l'un de l'autre, un atome ou groupement choisi parmi : H, -(CH₂)q-CH₃, -(CH₂)q-NH₂, -(CH₂)q-OH, - (CH₂)q-COOH ou 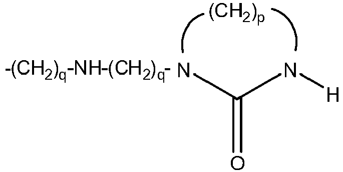 avec q un entier variant de 2 à 18, de préférence de 2 à 10, de préférence de 2 à 4 et p un entier supérieur ou égal à 2, de préférence ayant une valeur de 2 ou 3.

Parmi les composés organiques préférés répondant à la formule (VI), on peut citer les composés suivants :

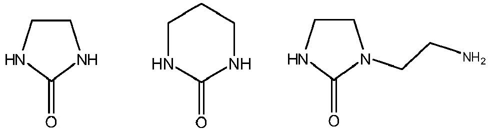

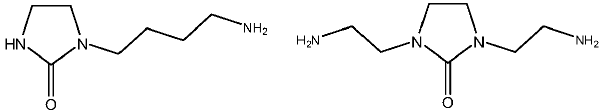

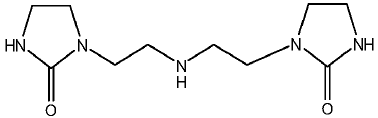

De préférence, selon cette variante, le composé organique de formule générale (VI) est :

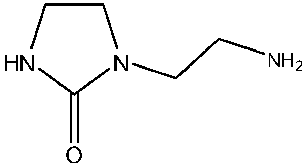

Il est également décrit une septième variante de ce mode de réalisation, ne faisant pas partie de la présente invention, dans laquelle le composé organique est un composé de formule générale (VII) :

R-NH-CO-CO-NH-R' (VII)

dans laquelle, R et R', identiques ou différents, représentent une chaîne hydrocarbonée saturée ou insaturée, linéaire, ramifiée ou cyclique, comprenant de 1 à 22 atomes de carbone, de préférence de 8 à 12 atomes de carbone, éventuellement substituée, et comprenant éventuellement des hétéroatomes, des cycles et/ou des hétérocycles.

Selon un autre mode de réalisation de l'invention, l'additif chimique est un acide polyphosphorique. Les acides polyphosphoriques (PPA) utilisables dans l'invention sont décrits dans WO 97/14753. Ce sont des composés de formule brute PqHrOs dans laquelle q, r et s sont des nombres positifs tels que :
q ≥ 2 et notamment q va de 3 à 20 ou plus et que 5q+r-2s=0.

En particulier, lesdits acides polyphosphoriques peuvent être des composés linéaires de formule brute P_{q}H_{(q+2)}O(_{3q+1)} correspondant à la formule développée : 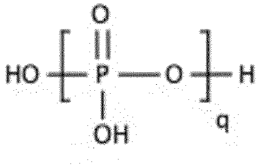 où q a la définition donnée ci-dessus. Ils peuvent encore être des produits de structure bidimensionnelle ou tridimensionnelle.

Tous ces acides polyphosphoriques peuvent être considérés comme des produits de polycondensation par chauffage de l'acide métaphosphorique aqueux.

On ne sortira pas du cadre de l'invention en combinant plusieurs additifs chimiques différents tels que différents composés organiques de formule (I), (V), et/ou différents acides polyphosphoriques dans le liant clair.

Selon un mode de réalisation avantageux, le liant clair selon l'invention comprend au moins deux additifs chimiques.

Selon une première variante de ce mode de réalisation, le liant clair selon l'invention comprend au moins un premier additif chimique de formule (V) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique.

De préférence, et selon cette première variante, le liant clair selon l'invention comprend au moins un premier additif chimique de formule (V) et au moins un second additif chimique de formule (II).

Plus préférentiellement, et selon cette première variante, le liant clair selon l'invention comprend au moins un premier additif de formule (V) et au moins un second additif chimique de formule (IIA).

De préférence, et toujours selon cette première variante, le premier additif chimique de formule (V) est choisi parmi les diacides (z=2), les triacides (z=3) et les tétracides (z=4), de préférence parmi les diacides (z=2).

Plus préférentiellement, et toujours selon cette première variante, le premier additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et selon cette première variante, le premier additif chimique de formule (V) est l'acide sébacique ou acide 1,10-décanedioïque avec w = 8.

Selon une seconde variante de ce mode réalisation, le liant clair selon l'invention comprend au moins un premier additif chimique de formule (II) et au moins un second additif chimique choisi parmi : les additifs chimiques de formule (I) ; les additifs chimiques de formule (V) , le second additif chimique étant distinct du premier additif chimique.

Plus préférentiellement, et selon cette seconde variante, le liant clair selon l'invention comprend au moins un premier additif chimique de formule (IIA) et au moins un second additif chimique choisi parmi : les additifs chimiques de formule (I) ; les additifs chimiques de formule (V) , le second additif chimique étant distinct du premier additif chimique.

Encore plus préférentiellement, et selon cette seconde variante, le liant clair selon l'invention comprend au moins un premier additif de formule (IIA) et au moins un second additif de formule (V).

De préférence, et selon cette seconde variante, le second additif de formule (V) est choisi parmi les diacides (z=2), les triacides (z=3) et les tétracides (z=4), de préférence parmi les diacides (z=2).

Encore plus préférentiellement, et toujours selon cette seconde variante, le second additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Selon une troisième variante de ce mode de réalisation, le liant clair selon l'invention comprend au moins de l'acide sébacique ou acide 1,10-décanedioïque et au moins du N,N'-éthylènedi(stéaramide).

Selon une quatrième variante de ce mode de réalisation, le liant clair selon l'invention comprend au moins un premier additif de formule (I) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique.

De préférence, et selon cette quatrième variante, le second additif chimique est choisi parmi les additifs chimiques de formule (II) et les additifs chimiques de formule (V).

De préférence, et selon cette quatrième variante, le second additif chimique de formule (II) est choisi parmi les additifs chimiques de formule (IIA).

Plus préférentiellement, et selon cette quatrième variante, le second additif chimique de formule (II) est le N,N'-éthylènedi(stéaramide).

De préférence, et toujours selon cette quatrième variante, le second additif chimique de formule (V) est choisi parmi les diacides (z=2), les triacides (z=3) et les tétracides (z=4), de préférence parmi les diacides (z=2).

Encore plus préférentiellement, et toujours selon cette quatrième variante, le second additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et toujours selon cette quatrième variante, le second additif chimique de formule (V) est l'acide sébacique ou acide 1,10-décanedioïque.

De préférence, et selon cette quatrième variante, le premier additif chimique de formule (I) est le 2',3-bis[(3-[3, 5-di-*tert*-butyl-4-hydroxyphenyl]propionyl)]propionohydrazide. De préférence, et selon ce mode de réalisation, le ratio massique du premier additif chimique par rapport au second additif chimique est de 1 :99 à 99 :1, de préférence de 1 :9 à 9 :1, encore plus préférentiellement de 1 :5 à 5 :1.

Selon un premier mode de réalisation de l'invention, le liant clair additivé comprend de 0,1% à 5% en masse, de préférence de 0,5% à 5% en masse, plus préférentiellement de 0,5% à 2,8% en masse, et encore plus préférentiellement de 0,5% à 2,5% en masse d'additif chimique par rapport à la masse totale de la base de liant.

Selon un autre mode de réalisation de l'invention, le liant clair additivé selon l'invention est un liant clair concentré. Dans ce cas, avant sa mise en œuvre, par exemple dans une application décrite ci-dessous, celui-ci est fondu puis dilué avec au moins un autre liant clair non additivé. Cette dilution est calculée pour atteindre une teneur en additif de 0,1% à 5% en masse, de préférence de 0,5% à 5% en masse, plus préférentiellement de 0,5% à 2,8% en masse, et encore plus préférentiellement de 0,5% à 2,5% en masse d'additif chimique par rapport à la masse totale de la base de liant.

Selon un mode de réalisation de l'invention, le liant clair additivé peut en outre comprendre au moins un adjuvant polymère oléfinique.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B.
   Le monomère A est choisi parmi l'acétate de vinyle et les acrylates ou méthacrylates d'alkyle en C₁ à C₆.
   Le monomère B est choisi parmi l'acrylate de glycidyle et le méthacrylate de glycidyle. Les terpolymères éthylène/monomère A/monomère B comprennent de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.
(c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

Avantageusement, l'adjuvant polymère oléfinique est choisi parmi les terpolymères statistiques d'éthylène (b), d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation de l'invention, le liant clair comprend de 0,05% à 15% en masse, de préférence de 0,1% à 10% en masse, plus préférentiellement de 0,5% à 6% en masse de l'adjuvant polymère oléfinique par rapport à la masse totale dudit liant.

Selon un mode de réalisation particulier, on prépare un liant clair solide à froid et sous forme divisée en mettant en contact :
- au moins une base de liant clair telle que définie ci-dessus,
- de 0,1% à 5% en masse, de préférence de 0,5% à 4% en masse, plus préférentiellement de 0,5% à 2,8% en masse, et encore plus préférentiellement de 0,5% à 2,5% en masse d'au moins un additif chimique tel que défini ci-dessus,
- et de 0,05% à 15% en masse, de préférence de 0,1% à 10% en masse, plus préférentiellement de 0,5% à 6% en masse d'un adjuvant polymère oléfinique, les pourcentages étant donnés en masse rapportée à la masse totale de la base de liant clair.

Les quantités d'additif(s) chimique(s) et, éventuellement, de l'adjuvant polymère oléfinique sont ajustées en fonction de la nature de la base de liant clair utilisée. En particulier, la pénétrabilité visée est de préférence comprise de 5 à 50 1/10mm et la température de ramollissement bille et anneau (TBA) visée est, de préférence, supérieure ou égale à 60°C, étant entendu que la pénétrabilité est mesurée à 25°C selon la norme EN 1426 et la TBA selon la norme EN 1427.

### Procédé de transport et/ou de stockage et/ou de manipulation de liant clair solide à froid et sous forme divisée

Un autre objet de l'invention concerne également un procédé de transport et/ou de stockage et/ou de manipulation de liant clair solide à froid et sous forme divisée, ledit liant clair étant transporté et/ou stocké et/ou manipulé sous forme de pains ou de granules de liant clair solides à température ambiante élevée. Le liant clair solide à froid et sous forme divisée est tel que décrit ci-dessus.

De préférence, le liant clair additivé de l'invention est transporté et/ou stocké à une température ambiante élevée pendant une durée supérieure ou égale à 2 mois, préférence à 3 mois.

Selon un mode de réalisation de l'invention, le liant clair additivé de l'invention est transporté et/ou stocké à une température inférieure à 100°C. En particulier, la température de transport et/ou de stockage correspond à la température ambiante. On entend par température ambiante, la température qui est atteinte lors du transport et/ou de stockage du liant clair selon l'invention sans que ledit liant clair soit chauffé par tout type de procédé. Ainsi, la température ambiante peut atteindre des températures élevées, inférieure à 100°C durant les périodes estivales, en particulier dans les régions géographiques à climat chaud.

De préférence, la température ambiante élevée est inférieure à 100°C.

Avantageusement, la température ambiante élevée est de 20°C à 90°C, de préférence de 20°C à 80°C, plus préférentiellement de 40°C à 80°C, encore plus préférentiellement de 40°C à 60°C.

Les liants clairs solides à froid et sous forme divisée selon la présente invention sont remarquables en ce qu'ils permettent le transport et/ou le stockage de liant clair à froid dans des conditions optimales, en particulier sans qu'il y ait fluage desdits liants clairs solides lors de leur transport et/ou le stockage, même lorsque la température ambiante est élevée et sans dégrader les propriétés dudit liant clair, voire en les améliorant.

### Pain de liant clair

Selon un mode de réalisation de l'invention, le liant clair solide à froid tel que décrit ci-dessus est sous forme de pain.

On entend par pain de liant clair, un bloc de liant clair ayant une masse comprise entre 0,1 kg et 1000 kg, de préférence, entre 1 kg et 200 kg, plus préférentiellement entre 1 kg et 50 kg, encore plus préférentiellement entre 5 kg et 25 kg, encore plus préférentiellement entre 10 kg et 30 kg, ledit bloc étant avantageusement parallélépipédique, de préférence étant un pavé.

Le pain de liant clair a, de préférence, un volume compris entre 100 cm³ et 50000 cm³, de préférence entre 5000 cm³ et 25000 cm³, plus préférentiellement entre 10000 cm³ et 30000 cm³, encore plus préférentiellement entre 14000 cm³ et 25000 cm³.

Lorsque le pain de liant clair est manipulé manuellement par une personne, la masse du pain de liant clair peut varier de 1 à 20 kg, et de 20 à 50 kg dans le cas d'une manutention par deux personnes. Lorsque la manutention est réalisée par des équipements mécaniques, la masse du pain de liant clair peut varier de 50 à 1000 kg.

Le pain de liant clair est fabriqué à partir de la composition de liant clair additivé telle que décrite ci-dessus selon tout procédé connu industriellement, par exemple par extrusion, par moulage, ou selon le procédé de fabrication décrit dans le document US2011/0290695.

Selon un mode de réalisation, le pain de liant clair est recouvert, sur tout ou partie de sa surface, d'un agent colorant tel que décrit ci-dessus, comme par exemple un pigment.

Selon un mode de réalisation, le pain de liant clair est avantageusement emballé d'un film thermofusible selon tout procédé connu, de préférence par un film en polypropylène, polyéthylène ou un mélange de polyéthylène et polypropylène. Le liant clair conditionné en pain de liant clair emballé d'un film thermofusible présente l'avantage d'être prêt à l'emploi c'est-à-dire qu'il peut être directement introduit dans l'unité d'enrobage de fabrication des enrobés. Le matériau thermofusible qui fond avec le liant clair additivé n'affecte pas les propriétés dudit liant clair.

Selon un mode de réalisation, le pain de liant clair peut également être conditionné dans un carton selon tout procédé connu.

En particulier, le pain de liant clair est conditionné dans un carton en faisant couler à chaud le liant clair dans un carton dont la paroi de la face interne est siliconée puis refroidit, les dimensions du carton étant adaptées au poids et/ou volume du pain de liant clair souhaité.

Lorsque le pain de liant clair selon l'invention est emballé d'un film thermofusible ou est conditionné dans un carton, la demanderesse a démontré que la détérioration dudit film thermofusible ou dudit carton lors du transport et/ou du stockage à froid dudit pain de liant clair n'entrainait pas le fluage du liant clair. Par conséquent, les pains de liant clair selon l'invention conservent leur forme initiale et ne collent pas entre eux lors de leur transport et/ou stockage à froid malgré le fait que le film thermofusible ou le carton soit endommagé. L'absence de fluage du liant clair sous forme de pain lors de son transport et/ou stockage à froid est due à la présence d'au moins un additif chimique au sein du liant clair.

### Granules de liant clair

Selon un autre mode de réalisation de l'invention, le liant clair solide à froid est sous forme de granules.

Les granules de liant clair selon l'invention peuvent avoir au sein d'une même population de granules, une ou plusieurs formes choisies parmi une forme cylindrique, sphérique ou ovoïde. Plus précisément, les granules de liant clair selon l'invention ont de préférence une forme cylindrique ou sphérique.

Selon un mode de réalisation de l'invention, la taille des granules de liant clair est telle que la dimension moyenne la plus longue est de préférence inférieure ou égale à 50 mm, plus préférentiellement de 3 à 30 mm, encore plus préférentiellement comprise de 5 à 20 mm. Par exemple, l'utilisation d'une filière permet de contrôler la fabrication de granules d'une taille choisie. Un tamisage permet de sélectionner des granules en fonction de leur taille.

De préférence, les granules de liant clair selon l'invention présentent un poids compris entre 0,1 g et 50 g, de préférence entre 0,2 g et 10 g, plus préférentiellement entre 0,2 g et 5 g.

Selon un autre mode de réalisation de l'invention, la taille des granules de liant clair est telle que la dimension moyenne la plus longue est de préférence inférieure à 20 mm, plus préférentiellement inférieure à 10 mm, encore plus préférentiellement inférieure à 5 mm.

La taille des granules de liant clair peut varier selon le procédé de fabrication employé. Par exemple, l'utilisation d'une filière permet de contrôler la fabrication de granules d'une taille choisie. Un tamisage permet de sélectionner des granules en fonction de leur taille. Les granules de liant sont obtenus par mise en forme de liant clair additivé selon l'invention tel que décrit ci-dessus selon tout procédé connu, par exemple selon le procédé de fabrication décrit dans le document US 3 026 568, le document WO 2009/153324 ou le document WO 2012/168380. Selon un mode de réalisation particulier, la mise en forme des granules peut être réalisée par égouttage, en particulier à l'aide d'un tambour. D'autres techniques peuvent être utilisées dans le procédé de fabrication des granules de liant clair, en particulier le moulage, l'extrusion...

Selon un mode de réalisation de l'invention, les granules de liant clair comprennent en outre au moins un anti-agglomérant, de préférence d'origine minérale ou organique.

Selon un mode de réalisation de l'invention, les granules de liant clair comprennent en outre au moins un agent colorant tel que décrit ci-dessus, comme par exemple un pigment.

Dans ces modes de réalisations, l'anti-agglomérant et/ou l'agent colorant sera choisi par l'homme du métier en fonction de la couleur du liant clair désirée.

De préférence, les granules de liant clair comprennent en outre entre 0,5% et 20% en masse, de préférence entre 2% et 20% en masse, plus préférentiellement entre 4% et 15% en masse de l'anti-agglomérant par rapport à la masse totale de liant clair additivé desdites granules.

Dans ce mode de réalisation, les granules de liant clair sont préparés à partir de liant tel que défini ci-dessus, lesdites granules étant préparées en mettant en contact :
- un ou plusieurs liants clairs additivés selon l'invention,
- entre 0,1% et 5% en masse, de préférence entre 0,5% et 4% en masse, plus préférentiellement entre 0,5% et 2,8% en masse, et encore plus préférentiellement entre 0,5% et 2,5% en masse d'au moins un additif chimique tel que défini ci-dessus, par rapport à la masse totale de liant clair additivé desdites granules, et
- entre 0,5% et 20% en masse, de préférence entre 2% et 20% en masse, plus préférentiellement entre 4% et 15% en masse de l'anti-agglomérant par rapport à la masse totale de liant clair additivé desdites granules.

Selon un mode de réalisation de l'invention, les granules de liant clair sont recouverts sur au moins une partie de leur surface d'un anti-agglomérant, de préférence sur l'ensemble de leur surface.

De préférence, la masse de l'anti-agglomérant recouvrant au moins une partie de la surface des granules est comprise entre 0,2% et 10% en masse, de préférence entre 0,5% et 8% en masse, plus préférentiellement entre 0,5% et 5% par rapport à la masse totale de liant clair additivé desdites granules.

Avantageusement, la masse de l'anti-agglomérant recouvrant au moins une partie de la surface des granules est d'environ 1% en masse par rapport à la masse totale de liant clair additivé desdites granules.

De préférence, la couche d'anti-agglomérant recouvrant les granules de liant clair selon l'invention est, de préférence, continue de façon à ce qu'au moins 90% de la surface des granules de liant clair est recouverte d'un anti-agglomérant, de préférence au moins 95%, plus préférentiellement au moins 99%.

De préférence également, l'épaisseur moyenne de la couche d'anti-agglomérant est, de préférence, supérieure ou égale à 20 µm, plus préférentiellement comprise entre 20 et100 µm.

Avantageusement, la couche d'anti-agglomérant doit être suffisamment épaisse pour que celle-ci soit continue.

Les granules de liant clair selon l'invention sont recouvertes de l'anti-agglomérant selon tout procédé connu, par exemple selon le procédé décrit dans le document US 3 026 568.

Par « anti-agglomérant » ou « composé anti-agglomérant », on entend tout composé qui limite, réduit, inhibe, retarde, l'agglomération et/ou l'adhésion des granules entre eux lors de leur transport et/ou de leur stockage à température ambiante et qui assure leur fluidité lors de leur manipulation.

De préférence, l'anti-agglomérant est choisi parmi le talc ; les fines généralement de diamètre inférieur à 125 µm à l'exception des fines calcaires, telles que les fines siliceuses ; le sable tel que le sable de fontainebleau ; le ciment ; le carbone ; les résidus du bois tels que la lignine, la lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les fumées de silice, les fumées de silice fonctionnalisées, notamment les fumées de silice hydrophobe ou hydrophile, les silices pyrogénées, notamment les silices pyrogénées hydrophobes ou hydrophiles, les silicates, les hydroxydes de silicium et les oxydes de silicium ; la poudre de matière plastique ; la chaux ; le plâtre ; la poudre de caoutchouc ; la poudre de polymères tels que les copolymères styrène-butadiène (SB), les copolymères styrène-butadiène-styrène (SBS) ; et leurs mélanges.

Avantageusement, l'anti-agglomérant est choisi parmi le talc ; les fines généralement de diamètre inférieur à 125 µm à l'exception des fines calcaires, telles que les fines siliceuses ; les résidus du bois tels que la lignine, la lignosulfonate, les poudres d'aiguilles de conifères, les poudres de cônes de conifères, notamment de pin; la poudre de verre ; le sable tel que le sable de fontainebleau ; les fumées de silice, notamment les fumées de silice hydrophobe ou hydrophile ; les silices pyrogénées, notamment les silices pyrogénées hydrophobes ou hydrophiles ; et leurs mélanges.

De préférence, le composé anti-agglomérant est choisi parmi les fumées de silice.

Au sens de l'invention, les composés « fumée de silice », et « silice pyrogénée » ont la même définition chimique et sont enregistrés sous le même numéro CAS 112 945-52-5. Par conséquent, au sens de l'invention on peut employer ces composés indifféremment l'un de l'autre

Par « silice pyrogénée », on entend, soit une silice pyrogénée, soit un dérivé de silice pyrogénée.

Par « silice pyrogénée », on entend un composé obtenu par l'hydrolyse en phase vapeur de chlorosilanes tels que le tétrachlorure de silicium, dans une flamme d'oxygène et d'hydrogène. De tels procédés sont généralement désignés comme des procédés pyrogènes dont la réaction globale est : SiCl₄ + H₂ + O₂ → SiO₂ + 4 HCl.

Les silices pyrogénées se distinguent des autres dioxydes de silicium en ce qu'elles présentent une structure amorphe. De haute pureté (> 99,8 % en silice), elles présentent un faible caractère hydrophile (pas de microporosité).

De préférence, le composé de silice pyrogénée est la silice pyrogénée.

Selon un mode de réalisation de l'invention, le composé de silice pyrogénée présente une surface spécifique comprise entre 25 et 420 m²/g, préférentiellement entre 90 et 330 m²/g, plus préférentiellement entre 120 et 280 m²/g.

La surface spécifique de la silice pyrogénée définie en m²/g communément appelée « aire de surface » ou « SA » est mesurée selon la méthode de S. Brunauer, PH Emmet et I. Teller, J. Am. Chemical Society, 60: 309 (1938) (BET).

Selon un mode de réalisation de l'invention, le composé de silice pyrogénée présente une taille moyenne de particules comprise entre 5 et 50 nm.

Selon un mode de réalisation de l'invention, le composé de silice pyrogénée présente un pH compris entre 3 et 10 lorsqu'il est en phase aqueuse.

Selon un mode de réalisation de l'invention, le composé de silice pyrogénée présente une teneur de carbone comprise entre 0,1 et 10% en poids par rapport au poids total du composé de silice pyrogénée.

Selon un mode de réalisation de l'invention, le composé de silice pyrogénée est choisi parmi un composé de silice pyrogénée hydrophile, un composé de silice pyrogénée hydrophobe et leurs mélanges.

De préférence, le composé de silice pyrogénée est un composé de silice pyrogénée hydrophile.

Par « hydrophile », on entend un composé qui est miscible avec l'eau en toutes proportions. Le composé de silice pyrogénée, ou dérivé de silice pyrogénée, utilisé au sens de l'invention peut être chimiquement modifié.

Différents types de composés de silice pyrogénée sont décrits dans les demandes de brevets suivants et peuvent être utilisés dans la présente invention :
- des silices pyrogénées silanisées, comme décrit dans WO 2004/020532, ou dans WO 2007/128636,
- des silices pyrogénées hydrophiles, comme décrit dans WO 2009/071467, WO 2011/000133 déposés au nom de Degussa AG ou Degussa Gmbh,
- des fumées de silice rendues hydrophobes par un traitement au moyen de polysiloxanes comme décrit dans WO 2008/141932, ou par silanisation comme décrit dans WO 2008/141930,
- des silices dopées par de l'oxyde de potassium comme décrit dans WO 2008/043635, WO 2008/022836,
- des silices sous forme d'agrégats de particules primaires comme décrit dans WO 2009/015969 déposé au nom de Evonik Degussa Gmbh ou dans WO 2010/028261 déposé au nom de Cabot Corporation.

Le composé de silice pyrogénée peut être mis en œuvre seul ou sous forme d'un mélange au sein d'une composition de revêtement.

Qu'il soit mis en œuvre seul ou en mélange dans une composition, le composé de silice pyrogénée peut être mis en œuvre dans le procédé selon l'invention sous la forme d'une poudre ou en dispersion dans un solvant qui s'évapore après application.

De préférence, lorsque la composition de revêtement comprend au moins un composé de silice pyrogénée et au moins un solvant, la composition de revêtement comprend de 5 à 70% en poids de composé de silice pyrogénée par rapport au poids total de la composition, plus préférentiellement de 20 à 40% en poids.

De préférence, le solvant est un solvant organique ou de l'eau. Par solvant organique, on entend tout solvant non miscible avec un bitume, tel qu'un alcool, par exemple l'éthanol. Les composés de silice pyrogénée utilisés dans l'invention sont commercialement disponibles et par exemple peuvent être vendus par Evonik Degussa sous la marque AEROSIL^{®}, comme par exemple l'AEROSIL^{®}200, par Cabot Corporation sous les marques CAB-O-SIL^{®} et CAB-O-SPERSE^{®} ou encore par Wacker Chemie AG sous la marque HDK^{®}.

Selon un mode de réalisation de l'invention, l'anti-agglomérant compris dans le liant clair formant les granules de liant clair peut être identique ou différent de l'anti-agglomérant recouvrant au moins une partie de la surface desdites granules de liant clair.

Selon un mode de réalisation de l'invention, les granules de liant clair comprennent un cœur et une couche de revêtement dans lequel :
- le cœur comprend au moins un liant clair additivé tel que défini ci-dessus et,
- la couche de revêtement comprend au moins un composé viscosifiant et au moins un composé anti-agglomérant tel que défini ci-dessus.

Selon un mode de réalisation de l'invention, les granules de liant clair sont recouverts sur au moins une partie de leur surface d'un agent colorant tel que décrit ci-dessus comme par exemple un pigment, de préférence sur l'ensemble de leur surface.

Par « couche de revêtement », on entend que la couche de revêtement recouvre au moins 90% de la surface du cœur, de préférence au moins 95% de la surface du cœur, plus préférentiellement au moins 99% de la surface du cœur.

Par « viscosifiant » ou « composé viscosifiant », on entend un composé qui a la propriété de diminuer la fluidité d'un liquide ou d'une composition et donc d'en augmenter la viscosité.

Les termes « viscosifiant » et « composé viscosifiant » sont utilisés au sens de l'invention, de manière équivalente et indépendamment l'un de l'autre.

Le viscosifiant au sens de l'invention est un matériau qui présente une viscosité dynamique supérieure ou égale à 50 mPa.s⁻¹, de préférence de 50 mPa.s⁻¹ à 550 mPa.s⁻¹, plus préférentiellement de 80 mPa.s⁻¹ à 450 mPa.s⁻¹, la viscosité étant une viscosité Brookfield mesurée à 65°C. La viscosité d'un viscosifiant selon l'invention est mesurée à 65°C au moyen d'un viscosimètre Brookfield CAP 2000+ et à une vitesse de rotation de 750 tr/min. La lecture de la mesure est réalisée après 30 secondes pour chaque température.

De préférence, le viscosifiant est choisi parmi :
- les composés gélifiants de préférence d'origine végétale ou animale, tels que : la gélatine, l'agar-agar, les alginates, les dérivés de cellulose, les amidons, les amidons modifiés, ou les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

Avantageusement, le viscosifiant est choisi parmi :
- les composés gélifiants de préférence d'origine végétale ou animale, tels que : la gélatine, l'agar-agar, les alginates, les dérivés de cellulose ou les gommes gellanes ;
- les polyéthylène glycols (PEG) tels que les PEG ayant un poids moléculaire compris entre 800 g.mol⁻¹ et 8000 g.mol⁻¹, comme par exemple un PEG ayant un poids moléculaire de 800 g.mol⁻¹ (PEG-800), un PEG ayant un poids moléculaire de 1000 g.mol⁻¹ (PEG-1000), un PEG ayant un poids moléculaire de 1500 g.mol⁻¹ (PEG-1500), un PEG ayant un poids moléculaire de 4000 g.mol⁻¹ (PEG-4000) ou un PEG ayant un poids moléculaire de 6000 g.mol⁻¹ (PEG-6000);
- les mélanges de tels composés.

Selon un mode de réalisation de l'invention, la couche de revêtement est obtenue par application d'une composition comprenant au moins un composé viscosifiant et au moins un composé anti-agglomérant sur tout ou partie de la surface du cœur du liant clair solide.

De préférence, la couche de revêtement est solide à température ambiante, y compris à température ambiante élevée.

De préférence, la composition comprenant au moins un composé viscosifiant et au moins un composé anti-agglomérant présente une viscosité supérieure ou égale à 200 mPa.s⁻¹, de préférence comprise entre 200 mPa.s⁻¹ et 700 mPa.s⁻¹, la viscosité étant une viscosité Brookfield.

Préférentiellement, la couche de revêtement comprend au moins 10% en masse d'au moins un composé viscosifiant par rapport à la masse totale de la couche de revêtement, de préférence de 10 à 90 % en masse, plus préférentiellement de 10 à 85% en masse.

Avantageusement, lorsque le vicosifiant est un gélifiant, comme par exemple de la gélatine, la couche de revêtement comprend de 10 à 90 % en masse de composé viscosifiant par rapport à la masse totale de la couche de revêtement, de préférence de 15 à 85%, encore mieux de 15 à 60%.

Avantageusement, lorsque le vicosifiant est un gélifiant, comme par exemple de la gélatine, la couche de revêtement comprend de 10 à 90 % en masse de composé anti-agglomérant par rapport à la masse totale de la couche de revêtement, de préférence de 15 à 85%, encore mieux de 40 à 85%.

Avantageusement, lorsque le vicosifiant est un PEG, comme par exemple un PEG ayant un poids moléculaire compris entre 800 g.mol⁻¹ et 8000 g.mol⁻¹, la couche de revêtement comprend de 10 à 90 % en masse de composé viscosifiant par rapport à la masse totale de la couche de revêtement, de préférence de 40 à 90%, encore mieux de 60 à 90%.

Avantageusement, lorsque le vicosifiant est un PEG, comme par exemple un PEG ayant un poids moléculaire compris entre 800 g.mol⁻¹ et 8000 g.mol⁻¹, la couche de revêtement comprend de 10 à 90 % en masse de composé anti-agglomérant par rapport à la masse totale de la couche de revêtement, de préférence de 10 à 60%, encore mieux de 10 à 40%.

Préférentiellement, la couche de revêtement comprend au moins 10% en masse d'un composé anti-agglomérant par rapport à la masse totale de la couche de revêtement, de préférence de 10 à 90% en masse, encore plus préférentiellement de 15 à 90 % en masse.

De préférence, la couche de revêtement représente au moins 5% en masse par rapport à la masse totale des granules, de préférence de 10 à 60% en masse, plus préférentiellement de 10 à 50%.

Avantageusement, le composé viscosifiant et le composé anti-agglomérant représentent au moins 90% en masse par rapport à la masse totale de la couche de revêtement, encore mieux au moins 95% en masse et avantageusement au moins 98% en masse.

Selon un mode de réalisation préféré, la couche de revêtement est essentiellement constituée du composé viscosifiant et du composé anti-agglomérant.

Outre le composé viscosifiant et le composé anti-agglomérant, la couche de revêtement peut éventuellement comprendre un ou plusieurs composés choisis parmi : les additifs chimiques, les polymères, ...

Selon un mode de réalisation de l'invention préféré, les granules de liant clair présentent:
- un cœur comprenant au moins un liant clair tel que défini ci-dessus et,
- une couche de revêtement comprenant de la gélatine ou un PEG et au moins un composé anti-agglomérant choisi parmi les fines généralement de diamètre inférieur à 125 µm ; les résidus de bois tels que la lignine, les poudres d'aiguilles de conifères et les poudres de cônes de conifères ; la poudrette de caoutchouc ; la poudre de copolymères SBS ; les fumées de silice, notamment les fumées de silice hydrophile ou hydrophobe ; les silices pyrogénées, notamment les silices pyrogénées hydrophobes ou hydrophiles ; et leurs mélanges.

De manière encore préférée, les granules de liant clair présentent :
- un cœur comprenant au moins un liant clair tel que défini ci-dessus et,
- une couche de revêtement comprenant de la gélatine ou un PEG et au moins un composé anti-agglomérant choisi parmi les fines généralement de diamètre inférieur à 125 µm ; la lignine ; la poudrette de caoutchouc ; les fumées de silice, notamment les fumées de silice hydrophile ou hydrophobe ; les silices pyrogénées, notamment les silices pyrogénées hydrophobes ou hydrophiles ; la poudre de copolymères SBS.

Selon un mode de réalisation encore préféré, les granules de liant clair sont essentiellement constitués de :
- un cœur constitué d'un liant clair additivé tel que défini ci-dessus et,
- une couche de revêtement constituée d'un mélange de gélatine ou d'un PEG, avec au moins un composé anti-agglomérant choisi parmi les fines généralement de diamètre inférieur à 125 µm ; la lignine ; la poudrette de caoutchouc ; la poudre de copolymères SBS ; les fumées de silice, notamment les fumées de silice hydrophile ou hydrophobe ; les silices pyrogénées, notamment les silices pyrogénées hydrophobes ou hydrophiles.

Préférentiellement, les granules de liant clair sont essentiellement constitués de :
- un cœur constitué d'un liant clair additivé tel que défini ci-dessus comprenant au moins un additif chimique tel que défini ci-dessus, et
- une couche de revêtement constituée d'un mélange de gélatine ou d'un PEG, avec au moins un composé anti-agglomérant choisi parmi les fines généralement de diamètre inférieur à 125 µm ; la lignine ; la poudrette de caoutchouc ; la poudre de copolymères SBS ; les fumées de silice ; les silices pyrogénées, notamment les silices pyrogénées hydrophobes ou hydrophiles.

Selon un autre mode de réalisation encore préféré, les granules de liant clair sont essentiellement constitués de :
- un cœur constitué d'un liant clair additivé tel que défini ci-dessus, comprenant un additif chimique de formule (I) défini ci-dessus et
- une couche de revêtement constituée d'un mélange de gélatine ou d'un PEG, avec au moins un composé anti-agglomérant choisi parmi les fines généralement de diamètre inférieur à 125 µm ; la lignine ; la poudrette de caoutchouc ; la poudre de copolymères SBS; les fumées de silice, notamment les fumées de silice hydrophile ou hydrophobe ; les silices pyrogénées, notamment les silices pyrogénées hydrophobes ou hydrophiles.

Selon un autre mode de réalisation encore préféré, les granules de liant clair sont essentiellement constitués de :
- un cœur constitué d'un liant clair additivé tel que défini ci-dessus, comprenant un additif chimique de formule (I) défini ci-dessus et
- une couche de revêtement constituée d'un mélange de gélatine ou d'un PEG, avec au moins un composé anti-agglomérant choisi parmi les fumées de silice, notamment les fumées de silice hydrophile ou hydrophobe.

Selon un mode de réalisation de l'invention, les granules de liant clair peuvent comprendre en outre une ou plusieurs autres couches d'enrobage, à base d'anti-agglomérant recouvrant tout ou en partie la couche de revêtement du liant clair solide à froid selon l'invention.

### Kit de liant clair solide à froid et sous forme divisée

Un autre objet de l'invention concerne un kit comprenant au moins :
- un liant clair solide à froid et sous forme divisée tel que défini ci-dessus,
- une capsule comprenant un composé choisi parmi au moins un copolymère à base de motifs diène conjugué et de motifs hydrocarbure monovinyl aromatique, par exemple à base de motifs butadiène et de motifs styrène, au moins un dope d'adhésivité, au moins un agent colorant et leur mélange.

Selon un mode de réalisation de l'invention, le liant clair solide à froid et sous forme divisée est sous forme de pains.

Selon un mode de réalisation de l'invention, le liant clair sous forme de pains comprend sur une de ses faces, une cavité permettant de loger tout ou partie de la capsule.

Selon un mode de réalisation de l'invention, la capsule est logée en tout ou partie dans la cavité de manière amovible.

Selon ce mode de réalisation, la capsule peut être une capsule à enveloppe molle, notamment un sachet, ou une capsule à enveloppe dure.

De préférence, la capsule est en film plastique thermofusible, notamment en polyéthylène, ou en silicone.

Un autre objet de l'invention concerne l'utilisation du kit tel que défini ci-dessus dans le procédé de préparation d'un liant clair prêt pour application selon l'invention.

Selon un mode de réalisation de l'invention, le liant clair sous forme de pain et la capsule formant le kit tel que défini ci-dessus sont utilisées dans le procédé de préparation d'un liant clair simultanément ou consécutivement.

Dans une variante, lorsque le liant clair sous forme de pain et la capsule formant le kit tel que défini ci-dessus sont utilisés consécutivement dans le procédé de préparation d'un liant clair, ledit liant clair sous forme de pain est préalablement chauffé puis la capsule comprenant le copolymère est ajouté. Dans cette variante, avant le chauffage du pain de liant clair, la capsule est délogée de la cavité présente sur l'une des faces du pain.

Dans une autre variante, lorsque le liant clair sous forme de pain et la capsule formant le kit tel que défini ci-dessus sont utilisés simultanément dans le procédé de préparation d'un liant clair.

### Applications du liant clair solide à froid et sous forme divisée

Un autre objet de l'invention concerne l'utilisation de liant clair solide à froid et sous forme divisée tel que défini ci-dessus pour la fabrication d'enrobés ou d'asphaltes coulés.

Le liant clair peut être employé pour fabriquer des enrobés ou des asphaltes coulés, en association avec des granulats selon tout procédé connu.

Dans un mode de réalisation de l'invention, les enrobés comprennent un liant clair selon l'invention, des granulats, éventuellement des charges et éventuellement des pigments.

Les charges (ou fines) sont des particules de dimensions inférieures à 0,063 mm. Les granulats comprennent des particules de dimensions 0/2 (sable), 2/4 (gravillons), 4/6 et 6/10.

L'enrobé comprend en général de 1 à 10% en poids de liant synthétique clair, par rapport au poids total de l'enrobé, de préférence de 4 à 8 % en masse, le reste étant constitué par les granulats, éventuellement les charges et éventuellement les pigments (les pigments représentant une quantité en masse de 0 à 1% de l'enrobé, les charges représentant une quantité en poids de 0 à 2% de l'enrobé).

Dans un autre mode de réalisation, les asphaltes coulés comprennent un liant clair selon l'invention, des charges minérales et éventuellement des pigments. L'asphalte comprend de 1 à 20% en poids de liant clair, par rapport au poids total de l'asphalte, de préférence de 5 à 10% en poids, le reste étant constitué par les charges et éventuellement les pigments (les pigments représentant une quantité en masse de 0 à 1% de l'asphalte).

Un autre objet de l'invention concerne un procédé de fabrication d'enrobés ou d'asphaltes coulés comprenant au moins un liant clair solide à froid et sous forme divisée et des granulats, le liant clair étant choisi parmi les liants clairs selon l'invention, ce procédé comprenant au moins les étapes de :
- chauffage des granulats à une température allant de 100°C à 180°C,
- mélange des granulats avec le liant clair dans une cuve telle qu'un malaxeur ou un tambour malaxeur,
- obtention d'enrobés ou d'asphaltes coulés

Dans un mode de réalisation de l'invention, le procédé ne comporte pas d'étape de chauffage du liant clair solide à froid et sous forme divisée avant son mélange avec les granulats.

Le procédé selon l'invention présente donc l'avantage de pouvoir être mis en œuvre sans étape préalable de chauffage du liant clair solide à froid et sous forme divisée.

Le procédé de fabrication d'enrobés ou d'asphaltes coulés selon l'invention ne requiert pas d'étape de chauffage du liant clair solide à froid et sous forme divisée avant mélange avec les granulats car au contact des granulats chauds, le liant clair solide à froid et sous forme divisée fond.

Le liant clair solide à froid et sous forme divisée selon l'invention tel que décrit ci-dessus présente l'avantage de pouvoir être ajouté directement aux granulats chauds, sans avoir à être fondu préalablement au mélange avec les granulats chauds.

De préférence, l'étape de mélange des granulats et du liant clair solide à froid et sous forme divisée est réalisée sous agitation, puis l'agitation est maintenue pendant au plus 5 minutes, de préférence au plus 1 minute pour permettre l'obtention d'un mélange homogène.

Par ailleurs lors de la fabrication d'enrobés ou d'asphaltes coulés, lorsque le liant clair est sous forme de granules composés d'une couche de revêtement, ladite couche de revêtement des granules casse sous l'effet du contact avec les granulats chauds et du cisaillement et il libère le liant clair. Enfin, la présence de la couche de revêtement dans le mélange du liant clair et de granulats ne dégrade pas les propriétés dudit liant clair pour la fabrication d'enrobés ou d'asphaltes coulés, comparativement à un liant clair classique, c'est-à-dire n'étant pas solide à froid et sous une forme divisée.

Un autre objet de l'invention concerne l'utilisation de liant clair solide à froid et sous forme divisée selon l'invention pour la fabrication d'émulsion.

Dans un mode de réalisation de l'invention, l'émulsion de liant clair comprend un liant clair selon l'invention, de l'eau et un agent émulsifiant.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### EXEMPLES

### Matériels et méthodes

Les bases de liants clairs selon l'invention sont préparées selon le procédé général suivant :
(i) On chauffe l'huile, par exemple à 170°C ;
(ii) On ajoute la résine, et on mélange par exemple de 1 h à 2 h à 170°C avec une vitesse d'agitation de 300 tr/min ;
(iii) On ajoute le copolymère en poudre, et on mélange par exemple 2 h à 170°C avec une vitesse d'agitation de 300 tr/min ;
(iv) Le cas échéant, on ajoute le dope d'adhésivité sous forme liquide puis on mélange par exemple pendant 15 minutes à 170°C.

Les caractéristiques rhéologiques et mécaniques des bases de liant clair selon l'invention auxquelles on fait référence dans ces exemples sont mesurées de la façon indiquée dans le tableau 1.

**Tableau 1**

| **Propriété** | **Abréviation** | **Unité** | **Norme de mesure** |
|---|---|---|---|
| Pénétrabilité à l'aiguille à 25°C | P₂₅ | 1/10 mm | NF EN 1426 |
| Température de ramollissement bille et anneau | TBA | °C | NF EN 1427 |

La variation de la température de ramollissement bille et anneau (TBA) est mesurée selon la norme NF EN 1427 de ladite composition entre l'échantillon extrait de la partie haute du tube d'échantillon et l'échantillon extrait de la partie basse du tube d'échantillon.

Des exemples de bases de liant clair C1 à C7 selon l'invention sont préparés selon le procédé décrit ci-dessus avec les constituants et selon les proportions (en pourcentage en poids par rapport au poids total de liant clair) indiqués dans le Tableau 2 suivant :

**Tableau 2 : Compositions des bases de liant clair**

| | **C1** | **C2** | **C3** | **C4** | **C5** | **C6** | **C7** |
|---|---|---|---|---|---|---|---|
| **Huile RAE¹** | 61,8 % | 62,0% | - | - | - | - | - |
| **Huile DAO⁵** | - | - | 63,8% | 63,8 % | 63,8% | 61,6% | 54,3 % |
| **Résine ²** | 33,0% | 32,8 % | 31,0% | 31,0% | 31,0% | 33,2% | 40,0% |
| **copolymère** SBS ³ | 5,0% | | - | - | 5,0% | 5,0% | 5,5 % |
| **Polymère EVA** | - | 2,0% | - | - | - | - | - |
| **Polymère EPDM** | - | - | - | 5,0% | - | - | - |
| **copolymère** thermoplastique **⁴** | | 3,0% | 5,0% | - | - | - | - |
| **Dope** | 0,2% | 0,2% | 0,2% | 0,2% | 0,2% | 0,2% | 0,2% |
| **Pénétration (1/10 mm)** | 62 | 59 | 72 | 92 | 68 | 64,4 | 27,9 |
| **TBA (°C)** | 51 | 53,4 | 90,4 | 61 | 76,5 | 82,0 | 84 |

| | | | | | | | |
|---|---|---|---|---|---|---|---|
| ¹ RAE signifie « Residual Aromatic Extracts » et se réfère aux résidus d'extraits aromatiques de produits pétroliers. L'huile RAE utilisée dans les exemples C1 à C4 a la composition suivante : 31% en composés paraffiniques, 49% en composés naphténiques, et 20% en composés aromatiques, en masse de composant par rapport à la masse totale de l'huile ² Résine hydrocarbure obtenue par polymérisation des hydrocarbures aromatiques insaturés C9-C10. Sa température de fusion est comprise entre 135 et 145°C selon l'ASTM D 3461. ³ Copolymère bloc linéaire 70/30 Styrène/Butadiène/Styrène comprenant une teneur pondérale en butadiène 1-2 de 28,5% par rapport à la masse totale des monomères et de masse moléculaire en masse d'environ 140 000 daltons équivalent polystyrène (PS). ⁴ Copolymère thermoplastique 70/30 Butadiène/Styrène de structure radiale, polymérisé en solution, comprenant une teneur pondérale en butadiène 1-2 de 7,1% et de masse moléculaire en masse d'environ 330 000 daltons équivalent polystyrène (PS). ⁵ huile DAO est une huile de désasphaltage au propane caractérisée par une teneur de 67% en composés paraffiniques, 19% en composés naphténiques, et 14% en composés aromatiques en tant qu'agent plastifiant, en masse de composant par rapport à la masse totale de l'huile. | | | | | | | |

### 1. Préparation des bases de liant clair additivé

Les compositions de bases de liant clair additivé **B₁, B₂, B₃, B₄, B₅** et **B₆** sont préparées à partir des compositions **C1 et C5** préparées précédemment et des additifs suivants :
- le 2',3-bis[(3-[3, 5-di-*tert-*butyl-4-hydroxyphenyl]propionyl)]propiono hydrazide, noté Additif **A1,**
- le N, N -éthylène-bis-stéréamide, noté Additif **A2,** et
- l'acide 1,10 décanedioïque, noté Additif **A3.**

Les quantités en pourcentage massique utilisées pour chaque base de liant clair additivé sont indiquées dans le tableau 3 suivant :

**Tableau 3**

| **Base de liant clair additivé** | **B₁** | **B₂** | **B₃** | **B₄** | **B₅** | **B₆** |
|---|---|---|---|---|---|---|
| Composition **C1** | 99,15% | 96,5% | 97,2% | - | - | - |
| Composition **C5** | - | - | - | 99,15% | 98,5% | 96% |
| Additif **A1** | 0,85% | - | 0,85% | 0,85% | - | - |
| Additif **A2** | - | 3,5% | 1,95% | - | - | 2,5% |
| Additif **A3** | - | - | - | - | 1,5% | 1,5% |

Les bases de liant clair additivé sont préparées de la manière suivante.

La base de liant clair **C1** ou **C5** est réchauffée à 160°C pendant deux heures à l'étuve puis le ou les additif(s) chimique(s) est(sont) rajouté(s). L'ensemble est homogénéisé pendant 1heure à une température entre 160°C et 180°C et sous agitation à 300 tours/min.

### 2. Stabilité au stockage

### Essai de résistance à la charge des compositions B₁, B₂, B₃ et B₄

Cet essai est mis en œuvre afin d'évaluer la résistance à la charge des compositions de liant clair additivé **B₁, B₂, B₃** et **B₄** préparées précédemment à une température de 50°C sous un effort en compression. Cet essai permet de prédire le comportement de granules de liant clair obtenus à partir des mêmes compositions de liant clair additivé **B₁, B₂, B₃** et **B₄** lors de leur transport et/ou leur stockage en vrac dans des sacs de 10 à 30 kg ou dans des Big Bag de 500 à 1000 kg ou dans des fûts de 200 kg. Cet essai permet notamment de prédire le comportement des granules en termes d'agglomération.

L'essai de résistance à la charge est réalisé à l'aide d'un analyseur de texture commercialisé sous le nom LF Plus par la société LLOYD Instruments et équipé d'une enceinte thermique.

Un récipient métallique de diamètre 25 mm contenant la composition de liant clair additivé **B₁**, **B₂, B₃** ou **B₄** est placé à l'intérieur de l'enceinte thermique réglée à une température de 50°C pendant 3 heures. Le piston de l'analyseur de texture est constitué d'un cylindre de diamètre 20 mm et de hauteur 60 mm. Le piston cylindrique est initialement placé au contact de la couche supérieure de la composition de liant clair additivé **B₁, B₂, B₃** ou **B₄.** Ensuite, le piston est enfoncé verticalement vers le bas, à une vitesse constante de 1 mm/min sur une distance calibrée de 10 mm de manière à exercer une force de compression sur la composition **B₁**, **B₂**, **B₃** ou **B₄** placée dans le récipient. Un logiciel permet d'enregistrer la force résultante en fonction du déplacement vertical du piston et de déterminer la force maximale résultante enregistrée. Les résultats sont donnés dans le tableau 4 ci-dessous.

**Tableau 4**

| **Composition** | **B₁** | **B₂** | **B₃** | **B₄** |
|---|---|---|---|---|
| Force max (en N) | 82,4 | 1,3 | 97,7 | 174 |

Les compositions de liant clair **B₁**et **B₄,** obtenues par l'addition dans une base de liant clair d'un composé chimique de type hydrazide (Additif **A1**)**,** présentent une dureté élevée.

La composition de liant clair **B₂**, obtenue par l'addition dans une base de liant clair d'un composé chimique de type amide (Additif **A2**)**,** présente une dureté faible. Cependant, la composition **B₃,** obtenue par l'addition dans une base de liant clair d'un composé chimique de type amide (Additif **A2**) et d'un additif chimique de type hydrazide (Additif **A1**), présente une dureté élevée.

En particulier, la dureté de la composition **B₃** est plus importante que la dureté de la composition **B₁**et que la dureté de la composition **B₂.** L'augmentation de la dureté de la composition **B₃** illustre donc une synergie entre les deux additifs chimiques.

En raison de leur dureté élevée, les compositions de liant clair **B₁**, **B₃** et **B₄** permettent d'obtenir des granules de liant clair qui seront stables durant leur stockage et leur transport en vrac dans des sacs de 10 à 30 kg ou dans des Big Bag de 500 à 1000 kg ou dans des fûts de 200 kg.

### 3. Préparation des cœurs de granules de composition de liant clair

Les cœurs de granules de composition de liant clair**G₁, G₂, G₃, G₄, G₅** et **G₆** sont préparés de manière respective à partir des compositions de liant clair additivé **B₁, B₂, B₃, B₄, B₅** ou **B₆** selon l'un des protocoles suivants.

### 3.1 Méthode générale pour la préparation des cœurs en composition de liant clair additivé des granules

La composition de liant clair additivé **B₁, B₂, B₃, B₄, B₅** ou **B₆** est réchauffée à une température comprise entre 150 et 180°C pendant deux heures à l'étuve avant d'être coulée dans un moule en silicone présentant différents trous de forme sphérique de façon à former les cœurs de granules. Après avoir constaté la solidification de la composition de liant clair additivé dans le moule, le surplus est arasé avec une lame chauffée au bec bunsen. Après 30 minutes, la composition de liant clair additivé solide sous forme de granules non enrobés est démoulée et stockée dans un plateau recouvert de papier siliconé.

### 3.2 Méthode générale pour la préparation des cœurs en composition de liant clair additivé des granules avec un procédé industriel

Pour la mise en œuvre de cette méthode, on peut utiliser un dispositif et un procédé tel que décrit de façon très détaillée dans le brevet US 4 279 579. Différents modèles de ce dispositif sont disponibles commercialement auprès de la société Sandvik sous le nom commercial de Rotoform.

Des granules de composition de liant clair additivé peuvent également être obtenus à partir de la composition de liant clair additivée **B₁, B₂, B₃, B₄, B₅** ou **B₆** versée dans le réservoir d'un tel dispositif et maintenue à une température comprise entre 130 et 270°C.

Une buse ou plusieurs buses d'injection permet(tent) le transfert de la composition de liant clair additivée **B₁, B₂, B₃, B₄, B₅** ou **B₆** à l'intérieur du double tambour de pastillation comportant un tambour externe rotatif, les deux tambours étant équipés de fentes, de buses et d'orifices permettant la pastillation de gouttes de composition de liant clair au travers du premier tambour fixe et des orifices présentant un diamètre compris entre 2 et 10 mm du tambour externe rotatif. Les gouttes de composition de liant clair additivée **B₁, B₂, B₃, B₄, B₅** ou **B₆** sont déposées sur la face supérieure d'une bande de roulement, horizontale, entrainée par des rouleaux.

### 4. Méthode générale pour la préparation des granules de composition de liant clair additivé solide comprenant une couche de revêtement composée d'au moins un composé anti-agglomérant

Les granules de liant clair obtenus selon les méthodes 3.1 et 3.2 sont laissés à température ambiante pendant 10 à 15 minutes. Les granules ainsi formés sont recouverts à leur surface d'un composé anti-agglomérant, puis passés au tamis afin d'enlever l'excédent de composé anti-agglomérant.

Les granules **G₁', G₂', G₃', G₄', G₅'** et **G₆'** sont préparés respectivement à partir des granules **G₁, G₂, G₃, G₄, G₅** et **G₆** préparés précédemment et selon la méthode décrite ci-dessus en utilisant comme composé anti-agglomérant de la silice pyrogénée, disponible commercialement sous la référence AEROSIL^{®}200.

Le pourcentage massique de l'enrobage pour les granules **G₁', G₂', G₃', G₄', G₅'** et **G₆'** est d'environ 1% en masse par rapport à la masse totale de liant clair des granules.

On constate que les granules obtenus présentent l'avantage d'être facilement transportables et présentent une bonne résistance au stockage.

## Revendications

1. Liant clair solide à froid et sous forme divisée comprenant au moins une base de liant clair et de 0,1% à 5% en masse, par rapport à la masse totale de ladite base de liant clair, d'au moins un additif chimique choisi parmi :
• un composé de formule générale (I) :
Arl-R-Ar2 (I),
dans laquelle :
• Ar1 et Ar2 représentent indépendamment l'un de l'autre un noyau benzène ou un système de noyaux aromatiques condensés de 6 à 20 atomes de carbones, substitués par au moins un groupe hydroxyle, et
• R représente un radical divalent éventuellement substitué, dont la chaîne principale comprend de 6 à 20 atomes de carbone et au moins un groupe choisi parmi les fonctions amide, ester, hydrazide, urée, carbamate, anhydride,
• un composé de formule générale (V) :
R"-(COOH)z (V),
dans laquelle R" représente une chaîne linéaire ou ramifiée, saturée ou insaturée comprenant de 4 à 68 atomes de carbone,
• un acide polyphosphorique,
et
• leurs mélanges.

2. Liant clair selon la revendication 1 comprenant de 0,5% à 2,5% en masse dudit additif chimique par rapport à la masse totale de ladite base de liant clair.

3. Liant clair selon la revendication 1 ou 2, dans lequel l'additif chimique est un composé organique qui présente une masse molaire en masse inférieure ou égale à 2000 gmol⁻¹, de préférence une masse molaire inférieure ou égale à 1000 gmol⁻¹.

4. Liant clair selon l'une quelconque des revendications 1 à 3 comprenant au moins :
(i) un agent plastifiant,
(ii) un agent structurant et,
(iii) un copolymère,
(iv) un additif chimique tel que défini à la revendication 1.

5. Liant clair selon l'une quelconque des revendications 1 à 4, sous forme de pains ou de granules.

6. Kit comprenant au moins :
- un liant clair solide à froid et sous forme divisée selon l'une quelconque des revendications 1 à 4,
- une capsule comprenant un composé choisi parmi au moins un copolymère à base de motifs diène conjugué et de motifs hydrocarbure monovinyl aromatique, par exemple à base de motifs butadiène et de motifs styrène, au moins un dope d'adhésivité, au moins un agent colorant et leur mélange.

7. Kit selon la revendication 6, dans lequel le liant clair solide à froid et sous forme divisée est sous forme de pains.

8. Kit selon la revendication 6 ou 7 dans lequel le liant clair solide à froid et sous forme divisée comprend sur une de ses faces, une cavité permettant de loger tout ou partie de la capsule.

9. Kit selon la revendication 8, dans lequel la capsule est logée tout ou partie dans ladite cavité de manière amovible.

10. Procédé de préparation d'un liant clair selon l'une quelconque des revendications 1 à 5, comprenant :
- le mélange d'au moins une base de liant clair et d'au moins un additif chimique tel que défini à la revendication 1, pour former un liant clair additivé,
- la mise en forme du liant clair additivé sous forme de pain ou de granules.

11. Procédé de transport et/ou de stockage et/ou de manipulation de liant clair solide à froid et sous forme divisée selon l'une quelconque des revendications 1 à 5, ou de kit comprenant un tel liant clair selon l'une quelconque des revendications 6 à 9, ledit liant clair étant transporté et/ou stocké et/ou manipulé sous forme de pains ou de granules de liant clair solides à température ambiante élevée.

12. Utilisation de liant clair solide à froid et sous forme divisée selon l'une quelconque des revendications 1 à 5 ou de kit comprenant un tel liant clair selon l'une quelconque des revendications 6 à 9 pour la fabrication d'enrobés ou d'asphaltes coulés.

13. Procédé de fabrication d'enrobés ou d'asphaltes coulés comprenant au moins un liant clair et des granulats, le liant clair étant choisi parmi les liants clairs solides à froid et sous forme divisée selon l'une quelconque des revendications 1 à 5, ce procédé comprenant au moins les étapes de :
- chauffage des granulats à une température allant de 100°C à 180°C,
- mélange des granulats avec le liant clair dans une cuve telle qu'un malaxeur ou un tambour malaxeur,
- obtention d'enrobés ou d'asphaltes coulés.

14. Procédé selon la revendication 13, qui ne comporte pas d'étape de chauffage du liant clair solide à froid et sous forme divisée avant son mélange avec les granulats.

15. Utilisation de liant clair solide à froid et sous forme divisée selon l'une quelconque des revendications 1 à 5, ou de kit comprenant un tel liant clair selon l'une quelconque des revendications 6 à 9, pour la fabrication d'émulsion.

## Patentansprüche

1. Klares Bindemittel, das im kalten Zustand fest ist und in unterteilter Form vorliegt, wobei es mindestens einen klaren Bindemittelgrundstoff sowie 0,1 % bis 5 % nach Masse, bezogen auf die Gesamtmasse des klaren Bindemittelgrundstoffs, an mindestens einem chemischen Zusatzstoff umfasst, welcher aus den folgenden ausgewählt ist:
• einer Verbindung mit der allgemeinen Formel (I):
Ar1-R-Ar2 (I),
in welcher:
• Ar1 und Ar2 unabhängig voneinander für einen Benzolring oder ein System kondensierter Aromatenringe mit 6 bis 20 Kohlenstoffatomen stehen, die mit mindestens einer Hydroxylgruppe substituiert sind, und
• R für einen zweibindigen, möglicherweise substituierten Rest steht, dessen Hauptkette 6 bis 20 Kohlenstoffatome und mindestens eine Gruppe umfasst, welche aus den Funktionen Amid, Ester, Hydrazid, Harnstoff, Carbamat, Anhydrid ausgewählt ist,
• einer Verbindung mit der allgemeinen Formel (V):
R"-(COOH)z (V),
in welcher R" für eine unverzweigte oder verzweigte Kette gesättigter oder ungesättigter Art steht, die 4 bis 68 Kohlenstoffatome umfasst,
• einer Polyphosphorsäure,
und
• deren Mischungen.

2. Klares Bindemittel nach Anspruch 1, das 0,5 % bis 2,5 % nach Masse von dem chemischen Zusatzstoff umfasst, bezogen auf die Gesamtmasse des klaren Bindemittelgrundstoffs.

3. Klares Bindemittel nach Anspruch 1 oder 2, wobei es sich bei dem chemischen Zusatzstoff um eine organische Verbindung handelt, die eine Molmasse aufweist, deren Masse höchstens 2.000 gmol⁻¹ beträgt, vorzugsweise eine Molmasse von höchstens 1.000 gmol⁻¹.

4. Klares Bindemittel nach einem beliebigen der Ansprüche 1 bis 3, wobei es zumindest Folgendes umfasst:
(i) einen Weichmacher,
(ii) ein strukturgebendes Mittel und
(iii) ein Copolymer,
(iv) einen chemischen Zusatzstoff gemäß der Begriffsbestimmung in Anspruch 1.

5. Klares Bindemittel nach einem beliebigen der Ansprüche 1 bis 4, in Form von Laiben oder Granulatkörnern.

6. Anwendungseinheit, die zumindest Folgendes umfasst:
- ein klares Bindemittel, das im kalten Zustand fest ist und in unterteilter Form vorliegt, nach einem beliebigen der Ansprüche 1 bis 4,
- eine Kapsel, die eine Verbindung, welche aus mindestens einem Copolymer auf Basis von konjugierten Dien-Bausteinen und von aromatischen Monovinylkohlenwasserstoff-Bausteinen, beispielsweise auf Basis von Butadienbausteinen und von Styrolbausteinen, ausgewählt ist, mindestens einen Haftkraftverstärker, mindestens einen Farbstoff und deren Mischung umfasst.

7. Anwendungseinheit nach Anspruch 6, wobei das klare Bindemittel, welches im kalten Zustand fest ist und in unterteilter Form vorliegt, in Form von Laiben vorliegt.

8. Anwendungseinheit nach Anspruch 6 oder 7, wobei das klare Bindemittel, welches im kalten Zustand fest ist und in unterteilter Form vorliegt, auf einer seiner Seiten einen Hohlraum umfasst, der es ermöglich, die Kapsel vollständig oder teilweise aufzunehmen.

9. Anwendungseinheit nach Anspruch 8, wobei die Kapsel derart vollständig oder teilweise in dem Hohlraum aufgenommen ist, dass sie daraus entnommen werden kann.

10. Verfahren zur Herstellung eines klaren Bindemittels nach einem beliebigen der Ansprüche 1 bis 5, wobei es Folgendes umfasst:
- Vermischen mindestens eines klaren Bindemittelgrundstoffs und mindestens eines chemischen Zusatzstoffs gemäß der Begriffsbestimmung in Anspruch 1, um ein klares Bindemittel mit Zusatzstoff zu erhalten,
- Formen des klaren Bindemittels mit Zusatzstoff, derart, dass es in Form von Laiben oder von Granulatkörnern vorliegt.

11. Verfahren zum Transportieren und/oder Lagern und/oder Handhaben eines klaren Bindemittels, das im kalten Zustand fest ist und in unterteilter Form vorliegt, nach einem beliebigen der Ansprüche 1 bis 5, oder einer Anwendungseinheit, die ein solches klares Bindemittel umfasst, nach einem beliebigen der Ansprüche 6 bis 9, wobei das klare Bindemittel in Form von Laiben oder Granulatkörnern aus klarem Bindemittel, die bei erhöhter Umgebungstemperatur fest sind, transportiert und/oder gelagert und/oder gehandhabt wird.

12. Verwendung eines klaren Bindemittels, das im kalten Zustand fest ist und in unterteilter Form vorliegt, nach einem beliebigen der Ansprüche 1 bis 5, oder einer Anwendungseinheit, die ein solches klares Bindemittel umfasst, nach einem beliebigen der Ansprüche 6 bis 9 zur Herstellung von Asphaltmischgut oder Gussasphaltsorten.

13. Verfahren zur Herstellung von Asphaltmischgut oder von Gussasphaltsorten, welche(s) zumindest ein klares Bindemittel und Gesteinskörnungen umfasst/umfassen, wobei das klare Bindemittel aus den klaren Bindemitteln, die im kalten Zustand fest sind und in unterteilter Form vorliegen, nach einem beliebigen der Ansprüche 1 bis 5 ausgewählt ist, wobei das Verfahren zumindest die folgenden Schritte umfasst:
- Erhitzen der Gesteinskörnungen auf eine Temperatur im Bereich von 100 °C bis 180 °C,
- Vermischen der Gesteinskörnungen mit dem klaren Bindemittel in einem Behälter wie etwa einem Mischgerät oder einer Mischtrommel,
- Erhalten von Asphaltmischgut oder von Gussasphaltsorten.

14. Verfahren nach Anspruch 13, wobei es keinen Schritt aufweist, im welchem das klare Bindemittel, welches im kalten Zustand fest ist und in unterteilter Form vorliegt, erhitzt wird, bevor es mit den Gesteinskörnungen vermischt wird.

15. Verwendung eines klaren Bindemittels, das im kalten Zustand fest ist und in unterteilter Form vorliegt, nach einem beliebigen der Ansprüche 1 bis 5, oder einer Anwendungseinheit, die ein solches klares Bindemittel umfasst, nach einem beliebigen der Ansprüche 6 bis 9 zur Herstellung einer Emulsion.

## Claims

1. A clear binder that is solid under cold conditions and in divided form, comprising at least one clear binder base and from 0.1% to 5% by weight relative to the total weight of said clear binder base of at least one chemical additive chosen from:
• a compound of general formula (I):
Ar1-R-Ar2 (I),
in which:
• Ar1 and Ar2 represent, independently of one another, a benzene nucleus or a system of condensed aromatic nuclei of 6 to 20 carbon atoms which are substituted by at least one hydroxyl group and
• R represents an optionally substituted divalent radical, the main chain of which comprises from 6 to 20 carbon atoms and at least one group chosen from the amide, ester, hydrazide, urea, carbamate and anhydride functions,
• a compound of general formula (V):
R"-(COOH)z (V),
in which R" represents a linear or branched and saturated or unsaturated chain comprising from 4 to 68 carbon atoms,
• a polyphosphoric acid,
and
• mixtures thereof.

2. The clear binder as claimed in claim 1, comprising from 0.5% to 2.5% by weight of said chemical additive relative to the total weight of said clear binder base.

3. The clear binder as claimed in claim 1 or 2, wherein the chemical additive is an organic compound which has a weight-average molar mass of less than or equal to 2000 gmol⁻¹, preferably a molar mass of less than or equal to 1000 gmol⁻¹.

4. The clear binder as claimed in any one of claims 1 to 3, comprising at least:
(i) one plasticizer,
(ii) one structuring agent, and
(iii) one copolymer,
(iv) one chemical additive as defined in claim 1.

5. The clear binder as claimed in any one of claims 1 to 4, in the form of blocks or pellets.

6. A kit comprising at least:
- one clear binder that is solid under cold conditions and in divided form as claimed in any one of claims 1 to 4,
- one capsule comprising a compound chosen from at least one copolymer based on conjugated diene units and aromatic monovinyl hydrocarbon units, for example, based on butadiene units and styrene units, at least one adhesion dopant, at least one coloring agent and a mixture thereof.

7. The kit as claimed in claim 6, wherein the clear binder that is solid under cold conditions and in divided form is in the form of blocks.

8. The kit as claimed in claim 6 or 7, wherein the clear binder that is solid under cold conditions and in divided form comprises, on one of its faces, a cavity for housing all or part of the capsule.

9. The kit as claimed in claim 8, wherein the capsule is removably housed entirely or partially in said cavity.

10. A process for preparing a clear binder as claimed in any one of claims 1 to 5, comprising:
- mixing at least one clear binder base and at least one chemical additive as defined in claim 1, to form an additivated clear binder,
- shaping the additivated clear binder in the form of a block or pellets.

11. A process for transporting and/or storing and/or handling clear binder that is solid under cold conditions and in divided form as claimed in any one of claims 1 to 5, or a kit comprising such a clear binder as claimed in any one of claims 6 to 9, said clear binder being transported and/or stored and/or handled in the form of blocks or pellets of clear binder that are solid at high ambient temperature.

12. The use of clear binder that is solid under cold conditions and in divided form as claimed in any one of claims 1 to 5 or of a kit comprising such a clear binder as claimed in any one of claims 6 to 9, for manufacturing poured asphalts or mixes.

13. A process for manufacturing poured asphalts or mixes comprising at least one clear binder and aggregates, the clear binder being chosen from clear binders that are solid under cold conditions and in divided form as claimed in any one of claims 1 to 5, this process comprising at least the steps of:
- heating the aggregates to a temperature ranging from 100°C to 180°C,
- mixing the aggregates with the clear binder in a vessel, such as a mixer or a drum mixer,
- obtaining poured asphalts or mixes.

14. The process as claimed in claim 13, which does not comprise a step of heating the clear binder that is solid under cold conditions and in divided form, before it is mixed with the aggregates.

15. The use of clear binder that is solid under cold conditions and in divided form as claimed in any one of claims 1 to 5 or of a kit comprising such a clear binder as claimed in any one of claims 6 to 9, for manufacturing emulsion.
